(19) **Europäisches Patentamt European Patent Office Office européen des brevets**

(11) **EP 2 041 193 B1**

(12) **FASCICULE DE BREVET EUROPEEN**

(45) Date de publication et mention de la délivrance du brevet:
**29.12.2010 Bulletin 2010/52**

(21) Numéro de dépôt: **07765751.8**

(22) Date de dépôt: **02.07.2007**

(51) Int Cl.:
**C08F 20/18** (2006.01)  **C08F 2/24** (2006.01)
**C08F 2/18** (2006.01)  **C08F 214/08** (2006.01)

(86) Numéro de dépôt international:
**PCT/EP2007/056626**

(87) Numéro de publication internationale:
**WO 2008/003669 (10.01.2008 Gazette 2008/02)**

(54) **PROCÉDÉ DE PRÉPARATION D'UN LATEX D'UN POLYMÈRE VINYLIQUE CHLORÉ**

VERFAHREN ZUR HERSTELLUNG EINES LATEX EINES VINYLCHLORIDPOLYMERS

PROCEDE DE PREPARATION D'UN LATEX D'UN POLYMERE VINYLIQUE CHLORE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **05.07.2006 FR 0606166**

(43) Date de publication de la demande:
**01.04.2009 Bulletin 2009/14**

(73) Titulaire: **Solvay SA
1050 Brussels (BE)**

(72) Inventeurs:
• **CLAASSEN, Peter
6902 AT Zevenaar (NL)**
• **OFFNER, Roland
39500 Tavaux (FR)**
• **FAYE, Benoît
1040 Brussels (BE)**
• **VANDERVEKEN, Yves
3001 Heverlee (BE)**

(74) Mandataire: **Jacques, Philippe et al
Solvay S.A.
Département de la Propriété Industrielle
Rue de Ransbeek, 310
1120 Bruxelles (BE)**

(56) Documents cités:
• **J. I. AMALVY: "Semicontinuous emulsion polymerization of methyl methacrylate, ethyl acrylate, and methacrylic acid" JOURNAL OF APPLIED POLYMER SCIENCE, vol. 59, no. 2, 10 janvier 1996 (1996-01-10), pages 339-344, XP002421144**

**Description**

La présente invention concerne un procédé de préparation d'un latex semence d'un polymère de méthacrylate de méthyle (PMMA), un latex semence d'un PMMA, la préparation d'un latex d'un polymère vinylique chloré, en particulier d'un polymère du chlorure de vinylidène (PVDC), par polymérisation en émulsion ensemencée au moyen de cette semence et un latex d'un polymère vinylique chloré.

L'utilisation d'un latex semence d'un PMMA pour la polymérisation radicalaire en émulsion aqueuse du chlorure de vinylidène (VDC) est connue de longue date.

Ainsi, le brevet FR 1 466 220 décrit la polymérisation du VDC en émulsion aqueuse en présence de 3.63 % ou 3.44 % en poids, exprimé par rapport au poids total des monomères, d'un latex semence d'un PMMA préparé par polymérisation en émulsion aqueuse (exemples 4 et 5) en l'absence d'agent émulsionnant ou en présence d'une quantité très faible (1 % en poids par rapport aux monomères) de celui-ci introduite au départ de la réaction, conduisant à un latex dont les particules de polymère se caractérisent par un diamètre de 100 à 120 nm.

Or, la demanderesse a constaté qu'il peut être désavantageux pour les propriétés du polymère vinylique chloré, en particulier du PVDC et celles des films réalisés avec celui-ci, d'effectuer la polymérisation du VDC en présence d'une quantité élevée de latex semence d'un PMMA et/ou d'un latex semence d'un PMMA dont les particules se caractérisent par un diamètre trop important. Il reste donc un besoin de développer un latex semence d'un PMMA qui soit tel que les latex d'un polymère vinylique chloré, en particulier d'un PVDC, préparés par polymérisation ensemencée au moyen de celui-ci et les films préparés au départ de ces latex se caractérisent par des propriétés améliorées.

La synthèse de latex semence d'un PMMA utilisés pour la polymérisation de monomères différents des monomères vinyliques chlorés, en particulier différents du VDC, est divulguée dans d'autres documents. En particulier, R.F.G. Brown et C. Carr décrivent dans l'article intitulé « Préparation of concentrated monodisperse latex dispersions of predetermined particle size » dont la référence est « Surface Coatings International, Part B : Coatings Transactions, 84 (B4), 293-300, 2001 (CAS 137 :6454), la préparation de latex semence d'un PMMA faisant appel à de faibles quantités totales d'agent émulsionnant (de 0.1 à 0.2 % en poids par rapport aux monomères) introduites soit au départ soit en différé, conduisant à l'obtention de latex semence dont les particules se caractérisent par un diamètre moyen de minimum 73 nm. Ces latex semence sont ensuite utilisés pour la polymérisation de monomères (méth)acryliques.

La demande de brevet JP-A-54103498 décrit quant à elle la synthèse d'une semence d'un PMMA selon un procédé in-situ dans le réacteur de polymérisation où elle est utilisée, sans être isolée au préalable, pour la polymérisation ultérieure de monomères (meth)acryliques et l'obtention de latex ultrafins (5 à 50 nm). Ce procédé de fabrication "in situ" de la semence d'un PMMA présente néanmoins différents désavantages. Ainsi, il se caractérise par une variabilité importante dans la cinétique de réaction et dans la taille des particules de la semence. En outre, il ne permet pas une automatisation de l'alimentation en semence du réacteur de polymérisation, il manque de reproductibilité (manque de précision sur les quantités de latex semence effectivement mises en oeuvre à la polymérisation) et de productivité (nécessité de faire précéder chaque cycle de polymérisation par la synthèse "in situ" de la semence).

Enfin, la demande de brevet JP-A-54103497 décrit quant à elle la synthèse d'un latex ultrafin (5-50 nm) d'un PMMA selon lequel la quantité totale d'agent émulsionnant introduit à la polymérisation ne dépasse pas 3 % en poids par rapport au poids total de monomère. Ce document n'indique en outre nulle part que les latex obtenus sont des latex semence qui puissent servir de base à la fabrication d'au moins un autre latex.

La présente invention a dès lors pour objet un procédé de préparation d'un latex semence d'un PMMA et un procédé de préparation d'un latex d'un polymère vinylique chloré, en particulier d'un PVDC, au moyen de cette semence qui ne présentent pas les désavantages des procédés de l'art antérieur tout en préservant leurs avantages.

Tout d'abord, la présente invention a pour objet un procédé de préparation d'un latex semence d'un PMMA par polymérisation radicalaire en émulsion aqueuse du méthacrylate de méthyle (MMA) et éventuellement d'au moins un comonomère, caractérisé en ce qu'on met en oeuvre :

(A) du MMA et éventuellement au moins un comonomère,
(B) au moins un agent générateur de radicaux;
(C) au moins un agent émulsionnant à raison d'une quantité totale d'au moins 4 % en poids par rapport au poids total de (A), et
(D) de l'eau,
qui comprend les étapes selon lesquelles

(1) on introduit dans un réacteur au moins une fraction de (B), au moins 2.5 % en poids de (C) par rapport au poids total de (A), au moins une fraction de (D) et éventuellement au moins une fraction de (A), puis
(2) on fait réagir le contenu du réacteur, tout en y introduisant de manière continue le solde de (A), (B), (C) et (D); et
(3) on obtient et on isole un latex semence d'un PMMA.

Par polymérisation radicalaire en émulsion aqueuse, on entend désigner, tout procédé de polymérisation radicalaire s'effectuant en milieu aqueux en présence d'au moins un agent émulsionnant à titre de surfactants et d'au moins un agent générateur de radicaux. Cette définition englobe spécifiquement la polymérisation en émulsion aqueuse dite « classique » dans laquelle on met en oeuvre des agents générateurs de radicaux hydrosolubles, ainsi que la polymérisation en microsuspension, encore appelée en dispersion aqueuse homogénéisée, dans laquelle on met en oeuvre des agents générateurs de radicaux oléosolubles et on réalise une émulsion de gouttelettes de monomères grâce à une agitation mécanique puissante et la présence d'agents émulsionnants.

L'invention est particulièrement adaptée à la polymérisation en émulsion aqueuse dite « classique » qui s'effectue dans les conditions connues de l'homme du métier. C'est ainsi que la polymérisation s'effectue à l'intervention d'agents émulsionnants et d'agents générateurs de radicaux hydrosolubles, présents en des quantités connues de l'homme du métier.

Par latex d'un polymère, on entend désigner une dispersion aqueuse du polymère dans l'eau obtenue après polymérisation radicalaire en émulsion aqueuse.

Par latex semence, on entend désigner un latex dont les caractéristiques sont telles qu'il puisse servir de base à la fabrication d'au moins un autre latex. En particulier, il se caractérise avantageusement par le fait qu'il absorbe bien la phase organique et qu'il évite la formation de populations de particules parasites.

Le latex semence d'un PMMA se caractérise avantageusement par une concentration en solides d'environ au moins 25 % en poids, de préférence d'au moins 30 % en poids. Le latex semence d'un PMMA se caractérise avantageusement par une concentration en solides d'environ au plus 40 % en poids, de préférence d'au plus 35 % en poids.

Par polymères du méthacrylate de méthyle ou PMMA, on entend désigner aussi bien les homopolymères du méthacrylate de méthyle (MMA) que les copolymères qu'il forme à titre de monomère principal avec au moins un comonomère copolymérisable avec celui-ci.

Par monomère principal pour les polymères du MMA, on entend désigner le monomère présent à raison d'au moins $100/n$ % en poids du mélange monomérique et qui engendrera au moins $100/n$ % en poids des unités monomérique du polymère obtenu, $n$ désignant le nombre de monomères du mélange monomérique.

Parmi les comonomères copolymérisables avec le MMA, on peut citer de manière non limitative, les acides, esters et amides acryliques, les acides, esters et amides méthacryliques, l'acrylonitrile et le méthacrylonitrile.

Des copolymères du MMA particulièrement préférés sont ceux contenant du MMA à raison d'au moins $100/n$ % en poids et à titre de monomères copolymérisables, le chlorure de vinyle, le chlorure de vinylidène et/ou les monomères (méth)acryliques répondant à la formule générale

$$CH_2 = CR_1R_2$$

dans laquelle $R_1$ est choisi parmi l'hydrogène et le radical méthyle et $R_2$ est choisi parmi le radical -CN et le radical -CO-$R_3$ dans lequel $R_3$ est choisi parmi le radical -OH, les radicaux -O-$R_4$ avec $R_4$ choisi parmi les radicaux alkyles linéaires ou ramifiés contenant de 2 à 18 atomes de carbones éventuellement porteurs d'un ou de plusieurs radicaux -OH, les radicaux époxyalkyles contenant de 2 à 10 atomes de carbone et les radicaux alkoxyalkyles contenant un total de 2 à 10 atomes de carbone et enfin $R_3$ est aussi choisi parmi les radicaux -NR$_5$R$_6$ dans lesquels $R_5$ et $R_6$, égaux ou différents, sont choisis parmi l'hydrogène et les radicaux alkyles contenant de 1 à 10 atomes de carbone, éventuellement porteurs d'un ou de plusieurs radicaux -OH.

Des copolymères du MMA tout particulièrement préférés sont ceux contenant à titre de monomères copolymérisables, le chlorure de vinyle, le chlorure de vinylidène et/ou les monomères (méth)aciyliques que sont l'acrylate de méthyle, l'acrylate d'éthyle, le méthacrylate d'éthyle, l'acrylate de n-butyle, le méthacrylate de n-butyle, l'acrylate de 2-éthylhexyle, le méthacrylate de 2-éthylhexyle, l'acrylate de 2-hydroxyéthyle, le méthacrylate de 2-hydroxyéthyle, le méthacrylate de glycidyle, l'acrylate de glycidyle, l'acrylonitrile, le méthacrylonitrile, l'acide acrylique, l'acide méthacrylique, l'acrylamide et la N-méthylolacrylamide.

Selon le procédé selon l'invention, de préférence on ne met pas en oeuvre de comonomère du méthacrylate de méthyle. Le procédé est donc de préférence tel qu'on met en oeuvre (A) du méthacrylate de méthyle. Le latex semence d'un PMMA est donc de préférence un latex semence d'un homopolymère de MMA.

Selon l'étape (1) du procédé de préparation d'un latex semence d'un PMMA, on introduit dans un réacteur éventuellement au moins une fraction de (A).

Lorsque l'on introduit au moins une fraction de (A) à l'étape (1), on introduit de préférence au moins 1 %, de manière particulièrement préférée au moins 2.5 %, de manière tout particulièrement préférée au moins 5 % et de manière vraiment tout particulièrement préférée au moins 8 % de la totalité en poids de (A) à l'étape (1).

Lorsque l'on introduit au moins une fraction de (A) à l'étape (1), on introduit de préférence au plus 30 %, de manière particulièrement préférée au plus 25 %, de manière tout particulièrement préférée au plus 20 % et de manière vraiment tout particulièrement préférée au plus 15 % de la totalité en poids de (A) à l'étape (1).

De bons résultats ont été obtenus sans introduire de fraction de (A) à l'étape (1) mais en introduisant la totalité de (A) à l'étape (2) de manière continue ou en introduisant environ 10 % de la totalité en poids de (A) à l'étape (1) et le solde à l'étape (2).

Le procédé de préparation de latex semence d'un PMMA selon l'invention met en oeuvre au moins un agent générateur de radicaux.

Par au moins un agent générateur de radicaux, on entend désigner que le procédé de préparation de latex semence d'un PMMA peut mettre en oeuvre un ou plusieurs agents générateurs de radicaux.

De préférence, selon le procédé selon l'invention, on met en oeuvre un seul agent générateur de radicaux. Dans la suite du texte, l'expression « agent générateur de radicaux » utilisé au singulier ou au pluriel doit être comprise comme désignant un ou plusieurs agents générateurs de radicaux sauf s'il en est désigné autrement.

Les agents générateurs de radicaux sont avantageusement hydrosolubles.

Par agents générateurs de radicaux hydrosolubles, on entend désigner les agents générateurs de radicaux solubles dans l'eau.

Les agents générateurs de radicaux sont avantageusement choisis parmi les diazocomposés hydrosolubles et les peroxydes hydrosolubles.

A titre d'exemples de diazocomposés hydrosolubles, on peut citer

- le 2-(carbamoylazo)-isobutyronitrile,
- l'acide 4,4'-azobis(4-cyanovalérique),
- le 4,4'-azobis(4-cyanovalérate) d'ammonium,
- le 4,4'-azobis(4-cyanovalérate) de sodium,
- le 4,4'-azobis(4-cyanovalérate) de potassium,
- le 2,2'-azobis (N, N'-diméthylèneisobutyramidine),
- le dihydrochlorure de 2,2'-azobis(N, N'-diméthylèneisobutyramidine),
- le dihydrochlorure de 2,2'-azobis(2-amidinopropane),
- le 2,2'-azobis[2-méthyl-N-(1,1-bis(hydroxyméthyl)-2-hydroxyéthyl) propionamide],
- le 2,2'-azobis[2-méthyl-N-(1,1-bis(hydroxyméthyl)éthyl) propionamide],
- le 2,2'-azobis[2-méthyl-N-(2-hydroxyéthyl) propionamide], et
- le dihydrate de 2,2'-azobis(isobutyramide).

L'acide 4,4'-azobis(4-cyanovalérique), le 4,4'-azobis(4-cyanovalérate) d'ammonium, le 4,4'-azobis(4-cyanovalérate) de sodium et le 4,4'-azobis(4-cyanovalérate) de potassium sont préférés.

A titre d'exemples de peroxydes hydrosolubles, on peut citer

- les peroxydes inorganiques comme les persulfates de sodium, de potassium et d'ammonium,
- l'hydroperoxyde de tert-butyle,
- le peroxyde d'hydrogène et
- les perborates.

Les peroxydes hydrosolubles sont préférés. Parmi ceux-ci, les persulfates de métal alcalin comme le persulfate de sodium et le persulfate de potassium, le persulfate d'ammonium ainsi que le peroxyde d'hydrogène sont particulièrement préférés. Sont tout particulièrement préférés, les persulfates de métal alcalin et le persulfate d'ammonium.

De manière particulièrement préférée, le procédé selon l'invention met en oeuvre un seul agent générateur de radicaux (B) et celui-ci est choisi parmi les persulfates de métal alcalin et le persulfate d'ammonium.

Selon l'étape (1) du procédé de préparation d'un latex semence d'un PMMA, on introduit dans un réacteur au moins une fraction de (B).

On introduit de préférence au moins 50 %, de manière particulièrement préférée au moins 60 %, de manière tout particulièrement préférée au moins 65 % et de manière vraiment tout particulièrement préférée au moins 70 % de la totalité en poids de (B) à l'étape (1).

Le procédé de préparation d'un latex semence d'un PMMA selon l'invention met en oeuvre (C) au moins un agent émulsionnant à raison d'une quantité totale d'au moins 4 % en poids par rapport au poids total de (A).

Par au moins un agent émulsionnant, on entend désigner que le procédé de préparation d'un latex semence d'un PMMA peut mettre en oeuvre un ou plusieurs agents émulsionnants.

De préférence, selon le procédé selon l'invention, on met en oeuvre un seul agent émulsionnant. Dans la suite du texte, l'expression « agent émulsionnant » utilisé au singulier ou au pluriel doit être comprise comme désignant un ou plusieurs agents émulsionnants sauf s'il en est désigné autrement.

Les agents émulsionnants peuvent être des agents émulsionnants anioniques, des agents émulsionnants non ioniques ou des agents émulsionnants cationiques.

Parmi les agents émulsionnants anioniques, on peut citer de manière non limitative, les sulfates d'alkyle comme le laurylsulfate de sodium, les sulfonates d'alkyle comme le dodécylbenzène sulfonate de sodium et le 1-hexadécanesulphonate de sodium pur ou sous forme de mélange de sulphonates d'alkyle en $C_{12}$-$C_{20}$ appelés parfois paraffines sulfonates, les mono ou disulfonates d' alkylaryle et les sulfosuccinates de dialkyle comme le diéthylhexylsulfosuccinate de sodium et le dihexylsulfosuccinate de sodium.

Parmi les agents émulsionnants non ioniques, on peut citer de manière non limitative, les dérivés alkyl- ou alkylaryléthoxylés, les dérivés alkyl- ou alkylarylpropoxylés et les esters ou éthers de sucre.

Parmi les agents émulsionnants cationiques, on peut citer les alkylamines éthoxylées et les alkylamines propoxylées.

Les agents émulsionnants sont de préférence des agents émulsionnants anioniques, éventuellement en mélange avec un ou des émulsionnants nonioniques. Les agents émulsionnants anioniques sont particulièrement préférés.

Le procédé selon l'invention met en oeuvre une quantité totale d'au moins 4 %, de préférence d'au moins 5 %, de manière particulièrement préférée d'au moins 7 % et de manière tout particulièrement préférée d'au moins 8 % en poids, par rapport au poids total de (A), d'au moins un agent émulsionnant, de préférence d'un seul agent émulsionnant.

Le procédé de préparation d'un latex semence d'un PMMA selon l'invention met en oeuvre avantageusement une quantité totale d'au plus 20 %, de préférence d'au plus 15 % et de manière préférée d'au plus 12 % en poids, par rapport au poids total de (A), d'au moins un agent émulsionnant, de préférence d'un seul agent émulsionnant.

Selon l'étape (1) du procédé de préparation d'un latex semence d'un PMMA, on introduit dans un réacteur au moins 2.5 % en poids de (C) par rapport au poids total de (A).

On introduit de préférence au moins 3 %, de manière particulièrement préférée au moins 5 %, de manière tout particulièrement préférée au moins 7 % en poids de (C) par rapport au poids total de (A) à l'étape (1).

On introduit de préférence au plus 20 %, de manière particulièrement préférée au plus 15 %, de manière tout particulièrement préférée au plus 12 % en poids de (C) par rapport au poids total de (A) à l'étape (1).

On introduit de préférence au plus 5 %, de manière particulièrement préférée au plus 2.5 % en poids de (C) par rapport au poids total de (A) à l'étape (2).

De bons résultats ont été obtenus en introduisant la totalité de (C), de préférence environ 10 % en poids de (C) par rapport au poids total de (A), à l'étape (1), ou en introduisant environ 8 % en poids de (C) par rapport au poids total de (A) à l'étape (1) et environ 2 % en poids de (C) par rapport au poids total de (A) à l'étape (2).

Selon l'étape (1) du procédé de préparation d'un latex semence d'un PMMA, on introduit dans un réacteur au moins une fraction de (D).

On introduit de préférence au moins 70 % de la totalité en poids de (D), de manière particulièrement préférée au moins 75 % de la totalité en poids de (D), de manière tout particulièrement préférée au moins 80 % de la totalité en poids de (D) à l'étape (1).

Lors de l'étape (1) ne se produit donc avantageusement aucune réaction.

Selon l'étape (2) du procédé de préparation d'un latex semence d'un PMMA, on fait réagir le contenu du réacteur.

Par « on fait réagir le contenu du réacteur », on entend désigner que c'est à l'étape (2) qu'est initiée la réaction de polymérisation.

Pour faire réagir le contenu du réacteur selon l'étape (2), on met en oeuvre des moyens par lesquels des radicaux sont générés en son sein. A cet effet, on peut notamment chauffer celui-ci ou l'exposer à une radiation lumineuse intense. De préférence, on chauffe le contenu du réacteur.

La température à laquelle on fait réagir le contenu du réacteur vaut avantageusement au moins 30°C et de préférence au moins 40°C. En outre, elle vaut avantageusement au plus 200°C et de préférence au plus 120°C.

Le procédé selon l'invention est avantageusement un procédé continu. Par procédé continu, on entend désigner qu'au moins une fraction de l'un de (A), (B), (C) ou (D) est introduite lors de l'étape (2), contrairement à un procédé batch ou discontinu selon lequel la totalité de (A), (B), (C) et (D) seraient introduites à l'étape (1).

Selon l'étape (2), on fait réagir le contenu du réacteur tout en y introduisant de manière continue le solde de (A), (B), (C) et (D). Par introduction de manière continue, on entend désigner que l'introduction est réalisée sur une certaine période de temps et qu'elle n'est pas réalisée en une injection unique à un moment donnée. Elle est de préférence effectuée avec une certaine vitesse qui est de manière particulièrement préférée constante.

Le solde de (A), (B), (C) et (D) peut être introduit de manière indépendante ou en mélange. De préférence, le solde de (A), (C) et (D) est introduit en mélange et le solde de (B) séparément de ce mélange.

Le procédé de préparation d'un latex semence d'un PMMA a de préférence lieu en l'absence d'un agent réducteur de viscosité, comme par exemple un électrolyte ionique.

Avantageusement, on procède à l'étape (2) jusqu'à ce que le MMA et éventuellement le ou les autres comonomères aient réagi dans certaines limites. De préférence, on procède à l'étape (2) jusqu'à ce que le taux de conversion du MMA et éventuellement du ou des autres comonomères soit d'au moins 82 % et d'au plus 100 %.

Selon l'étape (3) du procédé de préparation d'un latex semence d'un PMMA, on obtient et on isole un latex semence d'un polymère de méthacrylate de méthyle.

Selon l'étape (3), le latex semence d'un PMMA est donc isolé du réacteur dans lequel il a été préparé. Le procédé de préparation d'un latex semence d'un PMMA selon l'invention est donc avantageusement un procédé ex-situ, c'est-à-dire un procédé à l'issue duquel le latex semence est isolé contrairement à un procédé in-situ selon lequel le latex semence est synthétisé dans le réacteur où il est ensuite utilisé pour une polymérisation ultérieure.

Le latex semence peut alors être soumis ou non à un stripping des monomères résiduels avant son utilisation ultérieure. Dans le cas où le stripping est effectué, il peut l'être en tirant sous vide ou bien en tirant sous vide et simultanément en injectant de la vapeur d'eau dans le latex. De préférence, s'il est effectué, il l'est en tirant sous vide.

Selon le procédé de préparation d'un latex semence d'un PMMA selon l'invention, les particules du latex semence du polymère de méthacrylate de méthyle ont un diamètre moyen, mesuré par fractionnement hydrodynamique, avantageusement inférieur ou égal à 60 nm, de préférence inférieur ou égal à 55 nm, de manière particulièrement préférée inférieur ou égal à 50 nm, de manière tout particulièrement préférée inférieur ou égal à 40 nm et de manière vraiment tout particulièrement préférée inférieur ou égal à 35 nm.

La méthode de fractionnement hydrodynamique utilisée pour déterminer le diamètre moyen des particules est détaillée dans la partie expérimentale ci-dessous. Ce que l'on entend par diamètre moyen ainsi que par écart-type et coefficient de variation y est aussi défini.

Selon une variante particulièrement préférée, le procédé de préparation d'un latex semence d'un polymère de méthacrylate de méthyle selon l'invention se caractérise par ce qu'il comprend les étapes selon lesquelles

(1) on introduit dans un réacteur au moins une fraction de (B), au moins 7 % en poids de (C) par rapport au poids total de (A), au moins 80 % de la totalité en poids de (D) et au plus 15 % de la totalité en poids de (A), puis

(2) on fait réagir le contenu du réacteur, tout en y introduisant de manière continue le solde de (A), (B), (C) et (D); et

(3) on obtient et on isole un latex semence d'un PMMA.

La présente invention a également pour objet un latex semence d'un polymère de méthacrylate de méthyle caractérisé en ce que les particules de celui-ci ont un diamètre moyen, mesuré par fractionnement hydrodynamique, inférieur ou égal à 60 nm et en ce que la distribution des diamètres des particules, déterminée par fractionnement hydrodynamique, est monomodale et se caractérise par un écart-type inférieur ou égal à 20 nm.

Les définitions et préférences définies précédemment dans le contexte du procédé de préparation d'un latex d'un polymère de méthacrylate de méthyle s'appliquent au latex semence d'un polymère de méthacrylate de méthyle selon l'invention.

Par distribution monomodale des diamètres de particules du latex déterminée par fractionnement hydrodynamique, méthode détaillée dans les exemples ci-dessous, on entend désigner que les diamètres des particules du latex se distribuent selon un seul mode, en d'autres termes, un mode unique. Une distribution bimodale, par contre, se caractérise par une distribution selon deux modes distincts.

La distribution des particules du latex semence d'un polymère de méthacrylate de méthyle se caractérise par un écart-type de préférence inférieur ou égal à 15 nm et de manière particulièrement préférée inférieur ou égal à 10 nm.

La distribution des particules du latex semence d'un polymère de méthacrylate de méthyle se caractérise en outre par un coefficient de variation avantageusement inférieur ou égal à 40 %, de préférence inférieur ou égal à 35 % et de manière tout particulièrement préférée inférieur ou égal à 30 %.

Ce que l'on entend par diamètre moyen, distribution des particules, écart-type et coefficient de variation, tels que déterminés par fractionnement hydrodynamique, est défini dans la partie expérimentale.

Le latex semence d'un polymère de méthacrylate de méthyle se caractérise en outre avantageusement par une teneur en grumeaux, mesurée en filtrant le latex sur une poche de filtration de 55 μm d'ouverture moyenne et en pesant les grumeaux humides recueillis, inférieure à 10 g.

Par teneur en grumeaux inférieur à 10 g, on entend désigner qu'aucune quantité détectable de grumeau n'est recueillie lors de la filtration du latex sur une poche de filtration de 55 μm d'ouverture moyenne.

Le latex semence d'un polymère de méthacrylate de méthyle est avantageusement obtenu par le procédé de préparation d'un polymère de méthacrylate de méthyle selon l'invention.

Ensuite, la présente invention a pour objet un procédé de préparation d'un latex d'un polymère vinylique chloré par polymérisation radicalaire en émulsion aqueuse d'au moins un monomère vinylique chloré, caractérisé en ce que la polymérisation a lieu en présence d'au plus 3 % en poids, exprimé par rapport au poids total des monomères, de matière sèche d'un latex semence d'un polymère de méthacrylate de méthyle obtenu par le procédé selon l'invention.

Ce que l'on entend par latex et polymérisation en émulsion aqueuse est défini précédemment pour le procédé de préparation d'un latex semence d'un PMMA.

Le latex d'un polymère vinylique chloré est avantageusement caractérisé par une concentration en solides d'environ au moins 45 % en poids. Le latex d'un polymère vinylique chloré est avantageusement caractérisé par une concentration en solides d'environ au plus 75 % en poids.

Les particules polymériques élémentaires dans le latex d'un polymère vinylique chloré présentent avantageusement des diamètres moyens d'au moins 0.12 μm, de préférence d'au moins 0.13 μm, de manière particulièrement

préférée d'au moins 0.14 $\mu$m et de manière tout particulièrement préférée d'au moins 0.15 $\mu$m. Elles présentent avantageusement des diamètres moyens d'au plus 0.3 $\mu$m, de préférence d'au plus 0.2 $\mu$m.

Par au moins un monomère vinylique chloré, on entend désigner un ou plus d'un monomère vinylique chloré dont l'un d'entre eux est mis en oeuvre à titre de monomère principal.

Par monomère principal, on entend désigner le monomère présent à raison d'au moins 100/n % en poids du mélange monomérique et qui engendrera au moins 100/n % en poids des unités monomérique du polymère obtenu, n étant le nombre de monomères dans le mélange monomérique.

Par monomère vinylique chloré, on entend désigner les monomères chlorés monoéthyléniquement insaturés qui sont aliphatiques et qui ont pour seul(s) hétéroatome(s) un ou plusieurs atomes de chlore. A titre d'exemples de monomères vinyliques chlorés, on peut citer les monomères vinyliques chlorés dont le nombre d'atomes de chlore vaut 1, les monomères vinyliques chlorés dont le nombre d'atomes de chlore vaut 2, le trichloroéthylène, le 1,1,3-trichloropropène et le tétrachloroéthylène.

Une première famille préférée de monomères vinyliques chlorés est constituée par les monomères vinyliques chlorés dont le nombre d'atomes de chlore vaut 1. A titre d'exemples de monomères vinyliques chlorés dont le nombre d'atomes de chlore vaut 1, on peut citer le chlorure d'allyle, le chlorure de crotyle et, avec une mention toute particulière, le chlorure de vinyle conduisant à la formation de polymères du chlorure de vinyle.

Par polymères du chlorure de vinyle, on entend désigner les homopolymères et les copolymères du chlorure de vinyle.

Par copolymères du chlorure de vinyle, on entend désigner les copolymères du chlorure de vinyle, qui est le monomère principal, avec un ou plusieurs monomères copolymérisables avec celui-ci. Parmi les monomères copolymérisables avec le chlorure de vinyle, on peut citer de manière non limitative, les monomères styréniques comme le styrène, les monomères (méth)acryliques comme l'acrylate de n-butyle et le méthacrylate de méthyle, les esters vinyliques comme l'acétate de vinyle et les monomères oléfiniques comme l'éthylène, le propylène et le butadiène. L'acétate de vinyle est particulièrement préféré. Parmi les polymères du chlorure de vinyle, les homopolymères du chlorure de vinyle sont préférés.

Une seconde famille préférée de monomères vinyliques chlorés est constituée par les monomères vinyliques chlorés dont le nombre d'atomes de chlore vaut 2. A titre d'exemples de monomères vinyliques chlorés dont le nombre d'atomes de chlore vaut 2, on peut citer le 1,1-dichloropropène, le 1,3-dichloropropène, le 2,3-dichloropropène et, avec une mention toute particulière, le chlorure de vinylidène.

Le monomère vinylique chloré mis en oeuvre à titre de monomère principal est de manière particulièrement préférée choisi parmi les monomères vinyliques chlorés dont le nombre d'atomes de chlore vaut 2 et est de manière tout particulièrement préférée le chlorure de vinylidène. Les polymères concernés sont donc alors de manière tout particulièrement préférée les polymères du chlorure de vinylidène.

Par polymères du chlorure de vinylidène, on entend désigner les copolymères du chlorure de vinylidène.

Par copolymères du chlorure de vinylidène, on entend désigner les copolymères du chlorure de vinylidène, qui est le monomère principal, avec un ou plusieurs monomères copolymérisables avec celui-ci.

Parmi les monomères copolymérisables avec le chlorure de vinylidène, on peut citer de manière non limitative, le chlorure de vinyle, les esters vinyliques tels que par exemple l'acétate de vinyle, les éthers vinyliques, les acides, esters et amides acryliques, les acides, esters et amides méthacryliques, l'acrylonitrile, le méthacrylonitrile, le styrène, les dérivés styréniques, le butadiène, les oléfines comme par exemple l'éthylène et le propylène, l'acide itaconique et l'anhydride maléique mais aussi les surfactants copolymérisables comme l'acide sulfonique de 2-acrylamido-2-méthylpropane (AMPS) ou l'un de ses sels, de sodium par exemple et l'acide 2-sulfoéthylméthacrylate (2-SEM) ou l'un de ses sels, de sodium par exemple et l'ester phosphate de polypropylèneglycol à terminaison méthacrylate (tel le produit Sipomer PAM-200 de Rhodia) ou l'un de ses sels, de sodium par exemple.

Des copolymères du chlorure de vinylidène particulièrement préférés sont ceux contenant du chlorure de vinylidène à raison d'au moins 50 % en poids et à titre de monomères copolymérisables, le chlorure de vinyle et/ou au moins un monomère choisi parmi l'anhydride maléique, l'acide itaconique, les monomères (méth)acryliques répondant à la formule générale :

$$CH_2 = CR_8R_9$$

dans laquelle $R_8$ est choisi parmi l'hydrogène et le radical méthyle et $R_9$ est choisi parmi le radical -CN et le radical -CO-$R_{10}$ dans lequel $R_{10}$ est choisi parmi le radical -OH, les radicaux -O-$R_{11}$ avec $R_{11}$ choisi parmi les radicaux alkyles linéaires ou ramifiés contenant de 1 à 18 atomes de carbones éventuellement porteurs d'un ou de plusieurs radicaux -OH, les radicaux époxyalkyles contenant de 2 à 10 atomes de carbone et les radicaux alkoxyalkyles contenant un total de 2 à 10 atomes de carbone et enfin $R_{10}$ est aussi choisi parmi les radicaux -$NR_{12}R_{13}$ dans lesquels $R_{12}$ et $R_{13}$, égaux ou différents, sont choisis parmi l'hydrogène et les radicaux alkyles contenant de 1 à 10 atomes de carbone, éventuellement porteurs d'un ou de plusieurs radicaux -OH, les surfactants copolymérisables précités et l'ester phosphate de polypropylèneglycol à terminaison méthacrylate ou l'un de ses sels, de sodium par exemple.

Des copolymères du chlorure de vinylidène tout particulièrement préférés sont ceux contenant à titre de monomères copolymérisables, le chlorure de vinyle et/ou au moins un monomère choisi parmi l'anhydride maléique, l'acide itaconique, les monomères (méth)acryliques que sont l'acrylate de méthyle, le méthacrylate de méthyle, l'acrylate d'éthyle, le méthacrylate d'éthyle, l'acrylate de n-butyle, le méthacrylate de n-butyle, l'acrylate de 2-éthylhexyle, le méthacrylate de 2-éthylhexyle, l'acrylate de 2-hydroxyéthyle, le méthacrylate de 2-hydroxyéthyle, le méthacrylate de glycidyle, l'acrylate de glycidyle, l'acrylonitrile, le méthacrylonitrile, l'acide acrylique, l'acide méthacrylique, l'acrylamide, la N-méthylolacrylamide, l'acide sulfonique de 2-acrylamido-2-méthylpropane (AMPS) ou l'un de ses sels, de sodium par exemple, l'acide 2-sulfoéthylméthacrylate (2-SEM) ou l'un de ses sels, de sodium par exemple et l'ester phosphate de polypropylèneglycol à terminaison méthacrylate ou l'un de ses sels, de sodium par exemple.

Des copolymères du chlorure de vinylidène vraiment tout particulièrement préférés sont ceux contenant à titre de monomères copolymérisables, au moins un monomère choisi parmi l'anhydride maléique, l'acide itaconique, les monomères (méth)acryliques que sont l'acrylate de méthyle, le méthacrylate de méthyle, l'acrylate d'éthyle, le méthacrylate d'éthyle, l'acrylate de n-butyle, le méthacrylate de n-butyle, l'acrylate de 2-éthylhexyle, le méthacrylate de 2-éthylhexyle, l'acrylate de 2-hydroxyéthyle, le méthacrylate de 2-hydroxyéthyle, le méthacrylate de glycidyle, l'acrylate de glycidyle, l'acrylonitrile, le méthacrylonitrile, l'acide acrylique, l'acide méthacrylique, l'acrylamide, la N-méthylolacrylamide, l'acide sulfonique de 2-acrylamido-2-méthylpropane (AMPS) ou l'un de ses sels, de sodium par exemple, l'acide 2-sulfoéthylméthacrylate (2-SEM) ou l'un de ses sels, de sodium par exemple et l'ester phosphate de polypropylèneglycol à terminaison méthacrylate ou l'un de ses sels, de sodium par exemple.

Avantageusement, la quantité du chlorure de vinylidène dans les copolymères du chlorure de vinylidène varie de 50 à 95 % en poids, de préférence de 60 à 95 % en poids et de manière particulièrement préférée de 70 à 95 % en poids.

Avantageusement, la quantité du chlorure de vinyle dans les copolymères du chlorure de vinylidène varie de 0,5 à 50 % en poids, de préférence de 0,5 à 40 % en poids, de manière particulièrement préférée de 0,5 à 30 % en poids.

Avantageusement, la quantité d'acide itaconique et/ou du ou des monomère(s) (méth)acrylique(s) dans les copolymères du chlorure de vinylidène varie de 1 à 50 % en poids, de préférence de 2 à 40 % en poids, de manière particulièrement préférée de 2 à 30 % en poids.

Selon le procédé de préparation d'un latex d'un polymère vinylique chloré selon l'invention, la polymérisation a lieu en présence d'au plus 3 %, de préférence d'au plus 2.5 %, de manière particulièrement préférée d'au plus 2 %, de manière tout particulièrement préférée d'au plus 1.5 % et de manière vraiment tout particulièrement préférée d'au plus 1.3 % en poids, exprimé par rapport au poids total des monomères, de matière sèche d'un latex semence d'un PMMA obtenu par le procédé selon l'invention.

Par en présence, on entend désigner que le latex semence est dans le milieu de polymérisation lorsque celle-ci a lieu. Bien qu'il n'est pas exclu qu'une faible quantité du latex semence d'un PMMA puisse être ajoutée en différé, il est préféré que la totalité du latex semence d'un PMMA soit présente lorsque l'on fait réagir le contenu du réacteur. De manière particulièrement préférée, la totalité du latex semence d'un PMMA est introduite au départ et est donc présente lorsque l'on fait réagir le contenu du réacteur.

Par l'expression « au départ », on entend désigner avec la charge initiale.

Par l'expression « en différé », on entend que l'introduction commence après que la charge initiale ait été introduite et la réaction de polymérisation initiée.

Le procédé de préparation d'un latex d'un polymère vinylique chloré selon l'invention met en oeuvre avantageusement au moins un agent générateur de radicaux et au moins un agent émulsionnant.

Par au moins un agent générateur de radicaux, on entend désigner que le procédé de préparation d'un latex d'un polymère vinylique chloré peut mettre en oeuvre un ou plusieurs agents générateurs de radicaux.

Dans la suite du texte, l'expression « agent générateur de radicaux » utilisé au singulier ou au pluriel doit être comprise comme désignant un ou plusieurs agents générateurs de radicaux sauf s'il en est désigné autrement.

Les agents générateurs de radicaux sont avantageusement hydrosolubles. Ils sont avantageusement choisis parmi les diazocomposés hydrosolubles, les peroxydes hydrosolubles et les systèmes rédox associant un peroxyde hydrosoluble et un réducteur.

A titre d'exemples de diazocomposés hydrosolubles, on peut citer ceux qui sont cités préalablement pour le procédé de préparation de latex de PMMA selon l'invention.

L'acide 4,4'-azobis(4-cyanovalérique), le 4,4'-azobis(4-cyanovalérate) d'ammonium, le 4,4'-azobis(4-cyanovalérate) de sodium et le 4,4'-azobis(4-cyanovalérate) de potassium sont préférés.

A titre d'exemples de peroxydes hydrosolubles, on peut citer ceux qui sont cités préalablement pour le procédé de préparation de latex de PMMA selon l'invention.

Les peroxydes hydrosolubles sont préférés. Parmi ceux-ci, les persulfates de métal alcalin comme le persulfate de sodium et le persulfate de potassium, le persulfate d'ammonium ainsi que le peroxyde d'hydrogène sont particulièrement préférés. Sont tout particulièrement préférés, les persulfates de métal alcalin et le persulfate d'ammonium.

A titre d'exemples de peroxydes hydrosolubles constituant le système rédox, on peut citer les peroxydes hydrosolubles préalablement cités. A titre de réducteurs constituant le système rédox, on peut citer les sulfites de métal alcalin, les métabisulfites de métal alcalin et l'acide ascorbique.

Des systèmes rédox préférés sont les systèmes persulfate de métal alcalin ou d'ammonium/sulfite de métal alcalin, persulfate de métal alcalin ou d'ammonium/métabisulfite de métal alcalin, persulfate de métal alcalin ou d'ammonium/acide ascorbique, peroxyde d'hydrogène/acide ascorbique, peroxyde d'hydrogène/sulfate ferreux et t-butylhydroperoxyde/sulfoxylate. Le sulfite de sodium et le métabisulfite de sodium sont particulièrement préférés parmi respectivement les sulfites et métabisulfites de métal alcalin.

De manière particulièrement préférée, le procédé de préparation d'un latex d'un polymère vinylique chloré selon l'invention met en oeuvre un seul agent générateur de radicaux hydrosoluble. Celui-ci est de manière tout particulièrement préférée choisi parmi les persulfates de métal alcalin, le persulfate d'ammonium, le peroxyde d'hydrogène et les systèmes rédox persulfate de métal alcalin ou d'ammonium/sulfite de sodium, persulfate de métal alcalin ou d'ammonium/métabisulfite de sodium, persulfate de métal alcalin ou d'ammonium/acide ascorbique et peroxyde d'hydrogène/acide ascorbique.

Un agent générateur de radicaux oléosoluble (soluble dans les ou les monomères) peut éventuellement être en outre ajouté à la fin de la polymérisation.

Une fraction du ou des agents générateurs de radicaux est de préférence introduite au départ et une autre fraction l'est en différé.

Lorsque l'introduction a lieu en différé, elle peut être réalisée de manière continue ou en une seule injection. Ce que l'on entend par introduction de manière continue est défini précédemment pour le procédé de préparation d'un latex semence d'un PMMA.

Par au moins un agent émulsionnant, on entend désigner que le procédé de préparation d'un latex d'un polymère vinylique chloré peut mettre en oeuvre un ou plusieurs agents émulsionnants.

Dans la suite du texte, l'expression « agent émulsionnant » utilisé au singulier ou au pluriel doit être comprise comme désignant un ou plusieurs agents émulsionnants sauf s'il en est désigné autrement.

Les agents émulsionnants peuvent être des agents émulsionnants anioniques, des agents émulsionnants non ioniques ou des agents émulsionnants cationiques.

A titre d'exemples d'agents émulsionnants anioniques, on peut citer ceux qui sont cités préalablement pour le procédé de préparation de latex de PMMA selon l'invention.

A titre d'exemples d'agents émulsionnants non ioniques, on peut citer ceux qui sont cités préalablement pour le procédé de préparation de latex de PMMA selon l'invention.

A titre d'exemples d'agents émulsionnants cationiques, on peut citer ceux qui sont cités préalablement pour le procédé de préparation de latex de PMMA selon l'invention.

Les agents émulsionnants sont de préférence des agents émulsionnants anioniques, éventuellement en mélange avec un ou des émulsionnants nonioniques. Les agents émulsionnants anioniques sont particulièrement préférés.

Une fraction du ou des agents émulsionnants est de préférence introduite au départ et une autre fraction l'est en différé.

Lorsque l'introduction a lieu en différé, elle a de préférence lieu de manière continue.

Selon le procédé de préparation d'un latex d'un polymère vinylique chloré selon l'invention, les monomères peuvent être introduits dans le milieu de polymérisation de plusieurs manières différentes et sous une forme différente.

Ainsi selon une première variante, certains monomères sont introduits au départ en une seule fois et les autres en différé, soit en une seule fois, soit de manière continue.

Selon une seconde variante, la totalité des monomères est introduite au départ en une seule fois.

Selon une troisième variante, la totalité des monomères est introduite en différé de manière continue.

Selon une quatrième variante, une fraction de l'ensemble des monomères est introduite au départ et le solde est introduit en différé, soit en une seule fois, soit de manière continue.

Les monomères peuvent être introduits de manière individuelle (à l'état pur ou sous la forme d'une émulsion) ou après avoir été mélangé (le mélange étant introduit tel quel ou sous la forme d'une émulsion).

Après réaction du contenu du réacteur, mettant en oeuvre des moyens similaires à ceux évoqués pour le procédé de préparation d'un latex semence d'un PMMA, de préférence en chauffant le contenu du réacteur, jusqu'à ce que le taux de conversion des monomères soit avantageusement d'au moins 82 % et de préférence d'au plus 100 %, on obtient avantageusement un latex d'un polymère vinylique chloré.

La température à laquelle on fait réagir le contenu du réacteur vaut avantageusement au moins 30°C et de préférence au moins 40°C. En outre, elle vaut avantageusement au plus 200°C et de préférence au plus 120°C.

Le latex obtenu est alors avantageusement soumis à un stripping des monomères résiduels avant son utilisation ultérieure. Le stripping peut être réalisé en tirant sous vide ou bien en tirant sous vide et simultanément en injectant de la vapeur d'eau dans le latex. De préférence, le stripping est réalisé en tirant sous vide et simultanément en injectant de la vapeur d'eau dans le latex.

Enfin, la présente invention a pour objet un latex d'un polymère vinylique chloré comprenant des particules dispersées dans l'eau d'un interpolymère de particules d'un latex semence d'un polymère de méthacrylate de méthyle dont le diamètre moyen mesuré par fractionnement hydrodynamique est inférieur ou égal à 60 nm, et d'un polymère vinylique chloré ; les particules du latex d'un polymère vinylique chloré se caractérisant par un diamètre moyen, mesuré par fractionnement hydrodynamique, supérieur ou égal à 120 nm.

Le diamètre moyen des particules du latex d'un polymère vinylique chloré, tel que mesuré par fractionnement hydrodynamique, est de préférence supérieur ou égal à 130, de manière particulièrement préférée supérieur ou égal à 140 et de manière tout particulièrement préférée supérieur ou égal à 150 nm.

La distribution des particules du latex d'un polymère vinylique chloré, telle que déterminée par fractionnement hydrodynamique, est avantageusement monomodale.

La distribution des particules du latex d'un polymère vinylique chloré se caractérise en outre par un coefficient de variation avantageusement inférieur ou égal à 12 %, de préférence inférieur ou égal à 10 % et de manière tout particulièrement préférée inférieur ou égal à 8 %.

Le latex d'un polymère vinylique chloré selon l'invention se caractérise en outre avantageusement par le fait qu'il permet la réalisation de films se caractérisant avec avantage par l'absence de microcraquelures.

Les films obtenus se caractérisent avantageusement par une cristallinité après 1 jour à 30°C, mesurée de la manière décrite dans les exemples, inférieure ou égale à 1.1.

Les films obtenus se caractérisent avantageusement par une cristallinité après 1 semaine à 23°C, mesurée de la manière décrite dans les exemples, inférieure ou égale à 1.1.

Les films obtenus se caractérisent avantageusement par une flexibilité après traitement 1 jour à 30°C et 50 % d'humidité relative, mesurée de la manière décrite dans les exemples, supérieure ou égale à 80 cm, de préférence supérieure à 90 cm.

Les définitions et préférences définies précédemment dans le contexte du procédé de préparation d'un latex d'un polymère de méthacrylate de méthyle et du procédé de préparation d'un polymère vinylique chloré s'appliquent au latex d'un polymère vinylique chloré selon l'invention.

En particulier, le latex d'un polymère vinylique chloré selon l'invention est de manière préférée un latex d'un polymère du chlorure de vinylidène.

En particulier, le latex semence d'un polymère de méthacrylate de méthyle est de manière préférée un latex semence d'un homopolymère de MMA.

Le latex d'un polymère vinylique chloré selon l'invention est avantageusement obtenu par le procédé de préparation d'un polymère vinylique chloré selon l'invention.

Le latex semence d'un polymère de méthacrylate de méthyle est avantageusement le latex semence d'un polymère de méthacrylate de méthyle selon l'invention décrit précédemment.

Le procédé de préparation d'un latex semence d'un PMMA selon l'invention étant un procédé ex-situ, il présente l'avantage de se caractérisé par une meilleure reproductibilité au niveau de la taille des particules et de la cinétique de polymérisation. En outre, il se caractérise avantageusement par le fait qu'il permet une automatisation de l'alimentation en semence du réacteur de polymérisation de monomères vinyliques chlorés, en particulier de VDC. En outre, il se caractérise par une reproductibilité élevée (précision sur les quantités de latex semence mises en oeuvre à la polymérisation) et une productivité élevée dans la mesure où il n'est pas nécessaire de faire précéder chaque cycle de polymérisation par la synthèse "in situ" du latex semence. Ces différents avantages ne sont par contre pas présentés par un procédé « in-situ » de synthèse du latex semence.

La taille nanométrique du latex semence d'un PMMA permet par ailleurs de contrôler le diamètre des particules des latex d'un polymère vinylique chloré, en particulier des latex d'un PVDC et d'éviter la formation de populations de particules parasites.

L'utilisation d'un latex semence d'un PMMA pour la polymérisation de monomères vinyliques chlorés, en particulier de VDC, présente en outre l'avantage de permettre l'obtention de latex qui conviennent pour des applications dans lesquelles les réglementations en vigueur ne permettent pas la présence de certains composés dans la mesure où le PMMA n'est pas exclu par celles-ci.

Enfin, le latex semence d'un PMMA selon l'invention s'avère disposer des caractéristiques requises pour servir de base à la polymérisation de monomères vinyliques chlorés, en particulier de VDC, contrairement à des latex semence de type PVDC.

Le procédé de préparation d'un latex d'un polymère vinylique chloré, en particulier d'un latex d'un PVDC, faisant intervenir un latex semence d'un PMMA préparé par le procédé de préparation de latex semence d'un PMMA selon l'invention, présente l'avantage de permettre un gain considérable en temps de cycle de polymérisation des monomères.

Il permet également de réduire assez fortement le croûtage des autoclaves de polymérisation. Un gain substantiel en terme de nettoyage des autoclaves s'ensuit dès lors ainsi qu'une augmentation de la productivité.

Ce même procédé permet d'obtenir des latex qui se caractérisent par des particules de diamètres comparables et une stabilité thermique comparable aux latex selon l'art antérieur.

Par ailleurs, le procédé permet l'obtention de latex de polymères vinyliques chlorés, en particulier de latex d'un PVDC, qui peuvent donner lieu à la formation de films de qualité, présentant les propriétés barrière requises pour les applications visées mais aussi une vitesse de cristallisation plus faible et une flexibilité améliorée ; ce qui est particulièrement avantageux pour les applications visées.

Les exemples qui suivent sont destinés à illustrer l'invention sans pour autant en limiter la portée.

Détermination de la quantité de croûtage humide

La quantité de croûtage humide a été déterminée en recueillant le croûtage humide présent à l'intérieur de l'autoclave de polymérisation, notamment sur ses parois et sur les pales de l'agitateur. Le croûtage a été recueilli puis pesé à l'état humide. Le résultat a été exprimé en grammes.

Détermination de la quantité de grumeaux

La quantité de grumeaux dans le latex a été déterminée en filtrant le latex sur une poche de filtration de 55 $\mu$m d'ouverture moyenne (fournisseur GAF). Les grumeaux humides refusés sur cette poche ont été recueillis puis pesés à l'état humide.

Mesure de la distribution des diamètres des particules

La distribution des diamètres des particules du latex semence de PMMA et du latex de PVDC non additivé a été mesurée par fractionnement hydrodynamique sur un appareil commercialisé par la société Polymer Laboratories : PL-PSDA (particle size distribution analyser).

Le principe de la mesure est le suivant :

Un éluant est pompé en permanence dans une colonne remplie de microbilles non poreuses en polystyrène-divinylbenzène. L'espace entre les microbilles se comporte comme une multitude de canaux capillaires. L'échantillon à analyser et un marqueur ont été introduits simultanément dans l'appareil au moyen d'une vanne deux voies spéciale qui n'entraîne pas de perturbation dans la circulation de l'éluant. Le rôle du marqueur (benzoate de sodium) est de garantir un temps d'élution constant quel que soient les variations de pression dans la colonne. Dans les canaux capillaires de la colonne se créé un écoulement du type laminaire. Les grosses particules se déplacent dans la zone où la vitesse d'écoulement est la plus élevée, les petites particules dans la zone où elle est plus faible. Les grosses particules « sortent » en premier. La concentration des particules a été déterminée au moyen d'un détecteur UV.

La colonne était intégrée dans une cartouche. PL commercialise trois types de cartouches : type 1 : de 5 nm à 300 nm, type 2 : de 20 nm à 1200 nm et type 3 : de 500 nm à 2000 nm. Pour la mesure, une cartouche du type 2 a été utilisée.

L'échantillon de latex à analyser a été dilué à environ 1 % (suffisamment pour avoir une réponse appropriée du détecteur UV) au moyen de pipettes Pasteur de 230 mm. Avant injection dans l'appareil, l'échantillon dilué a été filtré sur 1.2 $\mu$m.

Le diamètre moyen des particules (d) est défini comme la somme des diamètres des particules individuelles divisée par le nombre total des particules. Il répond à la formule :

$$d = \frac{\sum_{i=1}^{n} v_i x_i}{\sum_{i=1}^{n} v_i}$$

dans laquelle $x_i$ est le diamètre de la particule i et $v_i$ est le pourcentage en volume de particules de diamètre $x_i$.

L'écart-type ($\sigma$) répond quant à lui à la formule suivante (avec les mêmes définitions pour $x_i$ et $v_i$) :

$$\sigma = \sqrt{\dfrac{\displaystyle\sum_{i=1}^{n} v_i(x_i - d)^2}{\displaystyle\sum_{i=1}^{n} v_i}}$$

Le coefficient de variation (C.V.) est quant à lui la déviation standard de la distribution des diamètres des particules exprimée comme un pourcentage du diamètre moyen des particules et répond à la formule suivante :

$$C.V. = \dfrac{\sigma}{d} \times 100$$

Le coefficient de variation permet donc avantageusement de comparer l'étalement de la distribution des particules entre latex dont les particules ont un diamètre moyen différent.

Test de stabilité thermique du latex de PVDC à 80°C

Le mode opératoire de la mesure du test de stabilité thermique a été le suivant :

- Remplir une ampoule en verre (longueur:diamètre = 100 mm: 15 mm) de latex à tester jusqu'à une hauteur de 60 mm.
- Fermer l'ampoule à l'aide d'un bouchon fileté en polypropylène.
- Placer l'ampoule dans une étuve ventilée à 80°C et observer l'évolution du latex une fois par jour.

Le résultat du test est le temps en jours au bout duquel un dépôt supérieur ou égal à 2.5 +/- 0.5 mm s'est formé au fond de l'ampoule.
S'il n'y a pas de dépôt au bout de 30 jours, le test est arrêté ; la stabilité du latex à 80°C est alors supérieure à 30 jours.
La mesure de stabilité thermique a été effectuée sur le latex de PVDC additivé.

Mesure de la cristallinité d'un film obtenu au départ du latex de PVDC

La cristallinité a été mesurée par infra-rouge IR-ATR au moyen d'un cristal de germanium. L'échantillon a été maintenu en contact parfait avec le cristal, face PVDC vers le cristal. Pour la mesure de l'indice de cristallinité, les 2 bandes considérées étaient à 1070 cm$^{-1}$ (bande amorphe) et 1040 cm$^{-1}$ (bande cristalline). La ligne de base a été prise à 1130 cm$^{-1}$ et l'indice a été mesuré comme suit : I = (absorbance 1040 - absorbance 1130)/(absorbance 1070 - absorbance 1130).
L'appareil utilisé était un FTIR Bruker, modèle Vertex 70, avec un accessoire spécial ATR horizontal de marque Harrick modèle horizon contenant le cristal de germanium dont les dimensions sont 50 x 10 x 2 mm avec un angle de 45°.

Mesure du taux de transmission à la vapeur d'eau d'un film obtenu au départ du latex de PVDC

Le taux de transmission à la vapeur d'eau d'un film obtenu au départ du latex de PVDC a été mesuré selon la norme ASTM F-1249 sur un appareil Permatran W 3/31 de Mocon à 38°C et 90 % d'humidité relative ; l'échantillon ayant été soumis à un vieillissement accéléré de 2 jours à 40°C avant la mesure.

Mesure de la flexibilité d'un film obtenu au départ du latex de PVDC

La flexibilité d'un film enduit obtenu au départ du latex de PVDC a été mesurée selon la méthode du poids tombant détaillée dans la norme ISO 7765-1.
Le principe de la méthode consiste en la chute libre d'un poids donné d'une hauteur variable (entre 0 et 90 cm) sur un échantillon du film à mesurer.
La hauteur à laquelle le poids est lâché ainsi que le type de déformation ou rupture de l'échantillon (ductile ou fragile) caractérise la flexibilité du film enduit.

Les échantillons étaient des carrés de 10* 10 cm découpés dans la partie centrale du film enduit de PVDC. Ils ont subi un vieillissement accéléré de 1 jour à 30°C.

La mesure a été reproduite jusqu'à ce que 5 résultats valides de même nature aient été obtenus.

Exemple 1 (selon l'invention) - Préparation d'un latex semence de PMMA

Dans un autoclave de polymérisation de 8.7 m$^3$ (agitation à 20 t/min) équipé d'un circuit de refroidissement, on a chargé successivement 3699 litres d'eau déminéralisée, 14.07 kg (6.7 g de matière active/kg de monomère) d'une solution de persulfate d'ammonium en poudre et 1023 litres (100 g de matière active/kg de monomère) d'une solution de dodécylbenzènesulfonate de sodium à 20 % de matière active (Disponil LDBS 20 fourni par Cognis). L'autoclave a été fermé puis soumis à deux vides à 140 mbar de pression absolue.

On a ensuite augmenté la vitesse d'agitation à 60 t/min tout en portant le mélange à 85°C. Lorsque la température a atteint 84°C, on a ajouté 2100 kg de méthacrylate de méthyle à vitesse constante pendant 3 heures tout en ajoutant 151 litres (2.87 g de matière active/kg de monomère) d'une solution de persulfate d'ammonium à 40 g/l à vitesse constante pendant la même durée de 3 heures.

Après la fin des injections de méthacrylate de méthyle et de persulfate d'ammonium, la polymérisation a été poursuivie jusqu'à obtention d'un écart de température inférieur à 5°C entre la température du milieu réactionnel et celle du circuit de refroidissement suivi d'une post-polymérisation d'une heure. La vitesse d'agitation a ensuite été réduite à 20 t/min et le latex a été dégazé puis strippé sous vide à 65°C pendant 3 heures.

L'extrait sec du latex de semence de PMMA ainsi polymérisé était de 32.5 %. Le diamètre moyen des particules déterminé par fractionnement hydrodynamique tel que décrit ci-dessus, était de 34 nm. La distribution des diamètres des particules était monomodale avec un écart-type de 6 nm.

Exemple 2 (selon l'invention) - Polymérisation du VDC en émulsion aqueuse en présence du latex semence de PMMA préparé à l'exemple 1

Dans un autoclave de polymérisation de 40 équipé d'un circuit de refroidissement, on a chargé successivement 10.9 litres d'eau déminéralisée et 240 ml d'une solution de nitrate de fer à 0.1 g/l. La vitesse d'agitation du milieu a été portée à 160 t/min. On a ensuite chargé 492 g (8 g de matière sèche/kg de monomères) du latex semence de PMMA préparé à l'exemple 1. L'autoclave a ensuite été fermé puis soumis à deux vides à 100 mbar de pression absolue. On a ensuite introduit successivement par aspiration 212 ml d'une solution de sulfonate d'alkyle secondaire à 50 g/l (Mersolat H40 fourni par Bayer), 18.17 kg de chlorure de vinylidène, 1.83 kg d'acrylate de méthyle et 62 g d'acide acrylique.

Après 5 minutes d'agitation, la température du milieu réactionnel a été portée à 55°C. A T=52°C, on a ajouté 500 ml d'une solution de métabisulfite de sodium à 14 g/l. A T=54°C + 20 min, on a ajouté 210 ml d'une solution de persulfate d'ammonium à 2 g/l puis on a réduit la vitesse d'agitation à 120 t/min. La fin de l'introduction du persulfate d'ammonium a été prise comme début de la polymérisation (To).

A To+30 min, on a ajouté 781.2 ml de Mersolat H40 à 425 g/l à vitesse constante pendant 5 heures tout en ajoutant à la vitesse constante de 50 ml/heure, une solution de persulfate d'ammonium à 2 g/l. L'injection de persulfate d'ammonium a été maintenue jusqu'à obtention d'un écart de température de 2°C entre la température du milieu réactionnel et celle du circuit de refroidissement. A ce moment-là, on a ajouté en une seule fois 150 ml d'une solution de persulfate d'ammonium à 33.3 g/l et on a post-polymérisé le latex pendant 60 minutes. La durée de polymérisation était de 12 heures.

Le latex a ensuite été dégazé à chaud puis strippé sous vide à 70°C. Pendant le stripping, la vitesse d'agitation a été réduite à 110 t/min. Après stripping, le latex a été refroidi à 20°C puis filtré sur une poche filtrante de 55 μm. Le latex a ensuite été ajusté en tension superficielle à 30 - 33 mN/m avec une solution de Mersolat H40 à 425 g/l en pH entre 2.5 -3.5 avec une solution de phosphate trisodique à 150 g/l, post-modifié avec 38.5 ml/kg de matière sèche de cire Gleitmittel 8645 (fournie par BASF) à 20 % de matière active et avec 16.7 ml/kg de matière sèche d'une solution de Promex Na$_2$OS (fournie par YDS) à 150 g/l et finalement ajusté en extrait sec entre 57 % et 58 %.

Exemple 3 (selon l'invention) - Propriétés du latex de PVDC obtenu à l'exemple 2

Les propriétés du latex de PVDC obtenu à l'exemple 2 ont été mesurées de la manière décrite précédemment. Le résultat est indiqué au tableau 1.

Un film a été réalisé au moyen du latex de PVDC obtenu à l'exemple 2. Pour cela, un primer a tout d'abord été appliqué comme couche d'adhésion sur un film de PVC vierge de 250 μm d'épaisseur. Après séchage, une première couche de PVDC a ensuite été enduite et après séchage le film a été rembobiné. L'opération a été renouvelée mais sans primer pour l'enduction de la deuxième couche de PVDC qui s'est superposée à la première et ainsi de suite jusqu'à la 4ème couche.

Cette enduction a été réalisée sur une ligne Kroenert avec les caractéristiques suivantes :

- vitesse de la ligne : 100 m/min,
- traitement corona : 1.5 kW,
- le primer était le produit Emuldur 381A fourni par BASF - 1 g/m$^2$
- le poids de PVDC : 40 g/m$^2$ en 3 couches,
- rotation du rouleau gravé en « inverse » (110 %)
- temperature de séchage = 90°C pour tous les fours (primer et PVDC).

La cristallinité, le taux de transmission à la vapeur d'eau et la flexibilité ont été mesurés comme décrit précédemment. Les résultats obtenus sont décrits au tableau 1.

Exemple 4 (comparatif) - Polymérisation du VDC en émulsion aqueuse en l'absence du latex semence de PMMA préparé à l'exemple 1

L'exemple 2 a été reproduit en l'absence du latex semence PMMA préparé à l'exemple 1. La quantité totale d'eau déminéralisée dans la recette de polymérisation a été maintenue constante pour obtenir un extrait sec comparable à celui de l'exemple 2. La durée de polymérisation était de 14 heures et 20 minutes.

Exemple 5 (comparatif) - Propriétés du latex de PVDC obtenu à l'exemple 4

Les propriétés du latex de PVDC obtenu à l'exemple 2 ont été mesurées de la manière décrite précédemment. Les résultats sont indiqués au tableau 1.

La cristallinité, le taux de transmission à la vapeur d'eau et la flexibilité ont été mesurés comme décrit précédemment. Les résultats obtenus sont décrits au tableau 1.

Exemple 6 (comparatif) - Polymérisation du VDC en émulsion aqueuse en présence du latex semence de PMMA préparé à l'exemple 1

On a repris l'exemple 2 sauf que l'on a chargé 1969 g (32 g de matière sèche/kg de monomères) du latex semence de PMMA préparé à l'exemple 1. La quantité totale d'eau déminéralisée dans la recette de polymérisation a été maintenue constante pour obtenir un extrait sec comparable à celui de l'exemple 2. La durée de polymérisation était de 9 heures et 45 minutes.

Exemple 7 (comparatif) - Propriétés du latex de PVDC obtenu à l'exemple 6

Les propriétés du latex de PVDC obtenu à l'exemple 6 ont été mesurées de la manière décrite précédemment. Les résultats sont indiqués au tableau 2.

Bien que le latex présentait un aspect normal, des difficultés ont été rencontrées lors de l'opération d'enduction (bouchage des filtres). Une seule couche a pu être enduite et le film obtenu présentait beaucoup de microcraquelures. L'opération d'enduction a donc été arrêtée (et il n'a pas été possible de mesurer les propriétés du film comme cela a été réalisé pour les autres exemples).

Exemple 8 (comparatif) - Préparation d'un latex semence de PMMA

L'exemple 1 a été reproduit sauf que la polymérisation a été effectuée dans un autoclave de 40 litres équipé d'un circuit de refroidissement et avec les modifications de recette suivantes : on a chargé successivement dans l'autoclave de polymérisation 19.244 litres d'eau déminéralisée, 480 ml (10 g de matière active/kg de monomère) d'une solution de dodécylbenzènesulfonate de sodium à 25 % de matière active (Disponil LDBS 25 fourni par Cognis) et 1,2 kg (100 g de matière active/kg de monomère) de méthacrylate de méthyle.

L'autoclave a été fermé puis soumis à deux vides à 120 mbar de pression absolue. On a ensuite mis en route l'agitateur du milieu réactionnel à 100 t/min tout en portant la température du mélange à 85°C. Lorsque la température a atteint 84°C (=To), on a ajouté en une seule fois 1149 ml (6.7 g de matière active/kg de monomère) d'une solution de persulfate d'ammonium à 70 g/l.

A To+30 min, on a ajouté à une vitesse constante et pendant 3 heures : 15.9 kg du mélange émulsionné composé des constituants suivants : 3.9 kg d'eau déminéralisée, 1.2 kg (25 g de matière active/kg de monomère) d'une solution de Disponil LDBS 25 à 250 g/l et 10.8 kg (900 g de matière active/kg de monomère) de méthacrylate de méthyle. A To+32 min, on a ajouté à une vitesse constante et pendant 3 heures, 480 ml (2.8 g de matière active /g de monomère) d'une solution de persulfate d'anunonium à 70 g/l.

La polymérisation a été contrôlée à 85°C. Après la fin des injections de l'émulsion de méthacrylate de méthyle et de la solution de persulfate d'ammonium, la polymérisation a été poursuivie jusqu'à obtention d'un écart de température inférieur à 2°C entre la température du milieu réactionnel et celle du circuit de refroidissement suivi d'une post-polymérisation d'une heure. Le latex a ensuite été dégazé à chaud puis strippé sous vide à 65°C pendant 3 heures.

L'extrait sec du latex de semence PMMA ainsi polymérisé était de 30.7 %. Le diamètre moyen des particules déterminé par fractionnement hydrodynamique tel que décrit ci-dessus, était de 63 nm. La distribution des diamètres des particules était monomodale avec un écart-type de 10 nm.

Exemple 9 (comparatif) - Polymérisation du VDC en émulsion aqueuse en présence du latex semence de PMMA préparé à l'exemple 8

L'exemple 2 a été reproduit sauf que l'on a chargé 521 g (8 g de matière sèche/kg de monomères) du latex semence de PMMA préparé à l'exemple 8. Dans cet exemple, la réaction de polymérisation a démarré plus lentement que dans l'exemple 2. Une dose supplémentaire de métabisulfite de sodium, identique à celle ajoutée initialement, puis une dose supplémentaire de persulfate d'ammonium, identique à celle ajoutée initialement, ont été ajoutées après 195 minutes de polymérisation. La quantité totale d'eau déminéralisée dans la recette de polymérisation a été maintenue constante pour obtenir un extrait sec comparable à celui de l'exemple 2. La durée de la polymérisation était de 14 heures et 9 minutes.

Exemple 10 (comparatif) - Propriétés du latex de PVDC obtenu à l'exemple 9

Les propriétés du latex de PVDC obtenu à l'exemple 9 ont été mesurées de la manière décrite précédemment. Les résultats sont indiqués au tableau 2.

Bien que le latex obtenu se caractérisait par une couleur grisâtre et la présence de boues et de coagulats, l'opération d'enduction a été engagée. Cependant, elle a du être arrêtée car le film obtenu présentait trop des microcraquelures (et il n'a pas été possible d'en mesurer les propriétés comme cela a été réalisé pour les autres exemples).

Exemple 11 (comparatif) - Préparation d'un latex semence de PMMA

L'exemple 1 a été reproduit sauf que la polymérisation a été effectuée dans un autoclave de 40 litres équipé d'un circuit de refroidissement et avec les modifications de recette suivantes : on a chargé successivement dans l'autoclave de polymérisation 19.514 litres d'eau déminéralisée, 120 ml (2.5 g de matière active/kg de monomère) d'une solution de dodécylbenzènesulfonate de sodium à 25 % de matière active (Disponil LDBS 25 fourni par Cognis) et 1,2 kg (100 g de matière active/kg de monomère) de méthacrylate de méthyle.

L'autoclave a été fermé puis soumis à deux vides à 120 mbar de pression absolue. On a ensuite mis en route l'agitateur du milieu réactionnel à 100 t/min tout en portant la température du mélange à 85°C. Lorsque la température a atteint 84°C (= To), on ajouté en une seule fois 1149 ml (6.7 g de matière active/kg de monomère) d'une solution de persulfate d'ammonium à 70 g/l

A To+ 30 min, on a ajouté à une vitesse constante et pendant 3 heures : 15.9 kg du mélange émulsionné composé des constituants suivants : 3.9 kg d'eau déminéralisée, 1.2 kg (25 g de matière active/kg de monomère) d'une solution de Disponil LDBS 25 à 250 g/l et 10.8 kg (900 g de matière active/kg de monomère) de méthacrylate de méthyle. A To+32 min, on a ajouté à une vitesse constante et pendant 3 heures 480 ml (2.8 g de matière active/kg de monomère) d'une solution de persulfate d'ammonium à 70 g/l.

La polymérisation a été contrôlée à 85°C. Après la fin des injections de l'émulsion de méthacrylate de méthyle et de la solution persulfate d'ammonium, la polymérisation a été poursuivie jusqu'à obtention d'un écart de température inférieur à 2°C entre la température du milieu réactionnel et celle du circuit de refroidissement suivi d'une post-polymérisation d'une heure. Le latex a ensuite été dégazé à chaud puis strippé sous vide à 65°C pendant 3 heures.

L'extrait sec du latex de semence PMMA ainsi polymérisé était de 32.3 %. Le diamètre moyen des particules déterminé par fractionnement hydrodynamique tel que décrit ci-dessus, était de 93 nm. La distribution des diamètres des particules était monomodale avec un écart-type de 8 nm.

Exemple 12 (comparatif) - Polymérisation du VDC en émulsion aqueuse en présence du latex semence de PMMA préparé à l'exemple 11

L'exemple 2 a été reproduit sauf que l'on a chargé 495 g (8 g de matière sèche/kg de monomères) du latex semence de PMMA préparé à l'exemple 11. La quantité totale d'eau déminéralisée dans la recette de polymérisation a été maintenue constante pour obtenir un extrait sec comparable à celui de l'exemple 2. La durée de polymérisation était de 16 heures et 35 minutes.

Exemple 13 (comparatif) - Propriétés du latex de PVDC obtenu à l'exemple 12

Les propriétés du latex de PVDC obtenu à l'exemple 12 ont été mesurées de la manière décrite précédemment. Les résultats sont indiqués au tableau 2.

Bien que le latex obtenu se caractérisait par une couleur grisâtre, l'opération d'enduction a été engagée. Cependant, elle a du être arrêtée car le film présentait trop de microcraquelures (et il n'a pas été possible d'en mesurer les propriétés comme cela a été réalisé pour les autres exemples).

Exemple 14 (comparatif) - Polymérisation du VDC en émulsion aqueuse en présence du latex semence de PMMA préparé à l'exemple 11

L'exemple 2 a été reproduit sauf que l'on a chargé 1981 g (32 g de matière sèche/kg de monomères) du latex semence de PMMA préparé à l'exemple 11. La quantité totale d'eau déminéralisée dans la recette de polymérisation a été maintenue constante pour obtenir un extrait sec comparable à celui de l'exemple 2. La durée de polymérisation était de 19 heures et 7 minutes.

Exemple 15 (comparatif) - Propriétés du latex de PVDC obtenu à l'exemple 14

Les propriétés du latex de PVDC obtenu à l'exemple 14 ont été mesurées de la manière décrite précédemment. Les résultats sont indiqués au tableau 2.

Le latex obtenu se caractérisait par la présence de fortes boues et de coagulats. L'opération d'enduction n'a pas pu être effectuée.

Exemple 16 (selon l'invention) - Préparation d'un latex semence de PMMA

L'exemple 1 a été reproduit sauf que la polymérisation a été effectuée dans un autoclave de 40 litres équipé d'un circuit de refroidissement et avec les modifications de recette suivantes : on a chargé successivement dans l'autoclave de polymérisation 16.724 litres d'eau déminéralisée, 3840 ml (80 g de matière active/kg de monomère) d'une solution de dodécylbenzènesulfonate de sodium à 25 % de matière active (Disponil LDBS 25 fourni par Cognis) et 1149 ml (6.7 g de matière active /kg de monomère) d'une solution de persulfate d'ammonium à 70 g/l.

L'autoclave a été fermé puis soumis à deux vides à 120 mbar de pression absolue. On a ensuite mis en route l'agitateur du milieu réactionnel à 100 t/min tout en portant la température du mélange à 85°C. Lorsque la température a atteint 84°C, la température To a été atteinte. A To+1 min, on a ajouté à une vitesse constante et pendant 3 heures : 17.04 kg du mélange émulsionné composé des constituants suivants : 4.08 kg d'eau déminéralisée, 0.96 kg (20 g de matière active/kg de monomère) d'une solution de Disponil LDBS 25 à 250 g/l et 12 kg (totalité du monomère) de méthacrylate de méthyle A To+2 min on a ajouté à une vitesse constante et pendant 3 heures 492ml (2.87 g de matière active /kg de monomère) d'une solution de persulfate d'ammonium à 70 g/l.

La polymérisation a été contrôlée à 85°C. Après la fin des injections de l'émulsion de méthacrylate de méthyle et de la solution persulfate d'ammonium, la polymérisation a été poursuivie jusqu'à obtention d'un écart de température inférieur à 2°C entre la température du milieu réactionnel et celle du circuit de refroidissement suivi d'une post-polymérisation d'une heure. Le latex a ensuite été dégazé à chaud puis strippé sous vide à 65°C pendant 3 heures.

L'extrait sec du latex de semence PMMA ainsi polymérisé était de 34.3 %. Le diamètre moyen des particules déterminé par fractionnement hydrodynamique tel que décrit ci-dessus, était de 35 nm. La distribution des diamètres des particules était monomodale avec un écart-type de 7 nm

Exemple 17 (selon l'invention) - Préparation d'un latex semence de PMMA

L'exemple 1 a été reproduit sauf que la polymérisation a été effectuée dans un autoclave de 40 litres équipé d'un circuit de refroidissement et avec les modifications de recette suivantes : on a chargé successivement dans l'autoclave de polymérisation 20.804 litres d'eau déminéralisée, 4800 ml (100 g de matière active/kg de monomère) d'une solution de dodécylbenzènesulfonate de sodium à 25 % de matière active (Disponil LDBS 25 fourni par Cognis) et 1,2 kg (100 g de matière active/kg de monomère) de méthacrylate de méthyle.

L'autoclave a été fermé puis soumis à deux vides à 120 mbar de pression absolue. On a ensuite mis en route l'agitateur du milieu réactionnel à 100 t/min tout en portant la température du mélange à 85°C. Lorsque la température a atteint 84°C (=To), on ajouté en une seule fois 1149 ml (6.7 g de matière active/kg de monomère) d'une solution de persulfate d'ammonium à 70 g/l.

A To+1 min, on a ajouté à une vitesse constante et pendant 3 heures : 10.8 kg (900 g de matière active/kg du monomère) de méthacrylate de méthyle. A To+2 min, on a ajouté à une vitesse constante et pendant 3 heures 492 ml (2.87 g de matière active /kg de monomère) d'une solution de persulfate d'ammonium à 70 g/l.

La polymérisation a été contrôlée à 85°C. Après la fin des injections de l'émulsion de méthacrylate de méthyle et de la solution persulfate d'ammonium, la polymérisation a été poursuivie jusqu'à obtention d'un écart de température inférieur à 2°C entre la température du milieu réactionnel et celle du circuit de refroidissement suivi d'une post-polymérisation d'une heure. Le latex a ensuite été dégazé à chaud puis strippé sous vide à 65°C pendant 3 heures

L'extrait sec du latex de semence de PMMA ainsi polymérisé était de 34.6 %. Le diamètre des particules déterminé par fractionnement hydrodynamique tel que décrit ci-dessus, était de 34 nm. La distribution des diamètres des particules était monomodale avec un écart-type de 10 nm.

Exemple 18 (comparatif) - Préparation d'un latex semence de PMMA

L'exemple 1 a été reproduit sauf que la polymérisation a été effectuée dans un autoclave de 40 litres équipé d'un circuit de refroidissement et avec les modifications de recette suivantes : on a chargé successivement dans l'autoclave de polymérisation 18.884 litres d'eau déminéralisée, 960 ml (20 g de matière active/kg de monomère) d'une solution de dodécylbenzènesulfonate de sodium à 25 % de matière active (Disponil LDBS 25 fourni par Cognis) et 1,2 kg (100 g de matière active/kg de monomère) de méthacrylate de méthyle.

L'autoclave a été fermé puis soumis à deux vides à 120 mbar de pression absolue. On a ensuite mis en route l'agitateur du milieu réactionnel à 100 t/min tout en portant la température du mélange à 85°C. Lorsque la température a atteint 84°C (=To), on ajouté en une seule fois 1149 ml (6.7 g de matière active/kg de monomère) d'une solution de persulfate d'ammonium à 70 g/l.

A To+10 min, on a ajouté à une vitesse constante et pendant 3 heures : 16.2 kg du mélange émulsionné composé des constituants suivants : 3.0 kg d'eau déminéralisée, 2.4 kg (50 g de matière active/kg de monomère) d'une solution de Disponil LDBS 25 à 250 g/l et 10.8 kg (900 g de matière active/kg de monomère) de méthacrylate de méthyle. A To+15 min, on a ajouté à une vitesse constante et pendant 3 heures 492 ml (2.87 g de matière active/kg de monomère) d'une solution de persulfate d'ammonium à 70 g/l.

La polymérisation a été contrôlée à 85°C. Après la fin des injections de l'émulsion de méthacrylate de méthyle et de la solution persulfate d'ammonium, la polymérisation a été poursuivie jusqu'à obtention d'un écart de température inférieur à 2°C entre la température du milieu réactionnel et celle du circuit de refroidissement suivi d'une post-polymérisation d'une heure. Le latex a ensuite été dégazé à chaud puis strippé sous vide à 65°C pendant 3 heures.

L'extrait sec du latex de semence de PMMA ainsi polymérisé était de 33.6 %. Le diamètre moyen des particules déterminé par fractionnement hydrodynamique tel que décrit ci-dessus, était de 50 nm. La distribution des diamètres des particules bien que d'allure monomodale n'était pas symétrique mais très asymétrique et très étalée avec des particules dont le diamètre variait de 5 nm à 160 nm. L'écart-type était de 24 nm.

Exemple 19 (comparatif) - Préparation d'un latex semence de PMMA

L'exemple 1 a été reproduit sauf que la polymérisation a été effectuée dans un autoclave de 40 litres équipé d'un circuit de refroidissement et avec les modifications de recette suivantes : on a chargé successivement dans l'autoclave de polymérisation 19.586 litres d'eau déminéralisée, 24 ml (0.5 g de matière active/kg de monomère) d'une solution de dodécylbenzènesulfonate de sodium à 25 % de matière active (Disponil LDBS 25 fourni par Cognis) et 1,2 kg (100 g de matière active/kg de monomère) de méthacrylate de méthyle.

L'autoclave a été fermé puis soumis à deux vides à 120 mbar de pression absolue. On a ensuite mis en route l'agitateur du milieu réactionnel à 100 t/min tout en portant la température du mélange à 85°C. Lorsque la température a atteint 84°C (= To), on ajouté en une seule fois 1149 ml (6.7 g de matière active/kg de monomère) d'une solution de persulfate d'ammonium à 70 g/l.

A To + 30 min, on a ajouté à une vitesse constante et pendant 3 heures : 15.9 kg du mélange émulsionné composé des constituants suivants : 3.9 kg d'eau déminéralisée, 1.2 kg (25 g de matière active/kg de monomère) d'une solution de Disponil LDBS 25 à 250 g/l et 10.8 kg (900 g de matière active/kg de monomère) de méthacrylate de méthyle. A To+32 min, on a ajouté à une vitesse constante et pendant 3 heures, 480 ml (2.8 g de matière active /kg de monomère) d'une solution de persulfate d'ammonium à 70 g/l.

La polymérisation a été contrôlée à 85°C. Après la fin des injections de l'émulsion de méthacrylate de méthyle et de la solution persulfate d'ammonium, la polymérisation a été poursuivie jusqu'à obtention d'un écart de température inférieur à 2°C entre la température du milieu réactionnel et celle du circuit de refroidissement suivi d'une post-polymérisation d'une heure. Le latex a ensuite été dégazé à chaud puis strippé sous vide à 65°C pendant 3 heures.

L'extrait sec du latex de semence de PMMA ainsi polymérisé était de 32.5 %. La distribution des diamètres des particules était bimodale avec une première famille de particule dont le diamètre moyen était de 44 nm et une seconde famille de particules dont le diamètre moyen était de 188 nm.

Tableau 1

| | Exemple 3 (selon l'invention) | Exemple 5 (comparatif) |
|---|---|---|
| Durée de polymérisation | 12h00min | 14h20min |
| Diamètre des particules | 154 nm | 154 nm |
| Distribution | monomodale | monomodale |
| Écart-type | 12 nm | 25 nm |
| Croûtage | 80 g | 500 g |
| Grumeaux | 100 g | 500 g |
| Stabilité thermique du latex additivé | 19 jours | 17 jours |
| Cristallinité après enduction | 0.98 | 0.99 |
| Cristallinité après 1 jour à 30°C | 1.05 | 1.17 |
| Cristallinité après 1 semaine à 23°C | 1.03 | 1.13 |
| Taux de transmission à la vapeur d'eau après raitement 2 jours à 40°C, mesuré à 38°C et 90 % d'humidité relative | 20 g.$\mu$m/m$^2$.d | 20 g.$\mu$m/m$^2$.d |
| Flexibilité après traitement 1 jour à 30°C et 50 % d'humidité relative | >90cm rupture ductile | 30 cm rupture fragile |

De l'analyse du tableau 1, il apparaît que le procédé selon l'invention permet de préparer des latex de PVDC se caractérisant par une productivité améliorée (durée de polymérisation réduite, quantité de croûtage et de grumeaux réduite) tout en conservant un diamètre moyen des particules dentique et une stabilité thermique comparable et donnant lieu à la réalisation de films se caractérisant par une vitesse de cristallisation plus faible résultant en une meilleure flexibilité que ceux préparés par un procédé selon l'art antérieur. De plus, les films se caractérisent par une barrière à la vapeur d'eau appropriée pour les applications recherchées. On peut également constater que la distribution des diamètres moyens des particules se caractérise par un écart-type plus faible pour le latex de PVDC selon l'invention (exemple 3) que celui mesuré pour le latex selon l'art antérieur (exemple 5).

Tableau 2

| | Exemple 3 (selon l'invention) | Exemple 7 (comparatif) | Exemple 10 (comparatif) | Exemple 13 (comparatif) | Exemple 15 (comparatif) |
|---|---|---|---|---|---|
| Durée de polymérisation | 12h00min | 9h45min | 14h09min | 16h35min | 19h07min |
| Diamètre des particules | 154 nm | 99 nm | 93 nm et 208 nm | 123 nm et 342 nm | 91 nm et 234 nm |
| Ecart-type | 12 nm | 15 nm | / | / | / |
| Coefficient de variation | 7.79 % | 15 % | / | / | / |
| Distribution | monomodale | monomodale | bimodale | bimodale | bimodale |
| Croûtage | 80 g | 450 g | 300 g | 200 g | 700 g |
| Grumeaux | 100 g | 50 g | / | 100 g | 200 g |
| Stabilité thermique | 19 jours | 15 jours | 12 jours | 14 jours | 9 jours |
| Opération d'enduction | Réalisable | Non réalisable | Non réalisable | Non réalisable | Non réalisable |

De l'analyse du tableau 2, il apparaît que le procédé selon l'invention se caractérise par une productivité améliorée si l'on tient compte des trois paramètres durée de polymérisation, quantité de croûtage et quantité de grumeaux.

Alors que le latex de PVDC obtenu par le procédé selon l'invention décrit à l'exemple 3 selon l'invention se caractérise par une distribution monomodale des diamètres des particules et un diamètre moyen de celles-ci de 154 nm, les latex de PVDC obtenus par les procédés décrits aux exemples comparatifs 7, 10, 13 et 15 se caractérisent par un diamètre moyen des particules plus faible et pour les 3 derniers par une distribution bimodale des diamètres des particules.

En terme de stabilité thermique, il apparaît que celle-ci est plus faible pour les latex obtenus par les procédés décrits aux exemples comparatifs, en particulier aux exemples comparatifs 10, 13 et 15, comparativement à celle mesurée pour le latex obtenu par le procédé décrit à l'exemple 3.

Enfin, alors que des films ont pu être réalisés et ensuite analysés au départ du latex obtenu à l'exemple 3, des difficultés ont été rencontrées lors de l'opération d'enduction des latex obtenus par les procédés décrits dans les exemples comparatifs : présence de boues et de coagulats, bouchage des filtres et/ou films présentant des microcraquelures.

## Revendications

1. Procédé de préparation d'un latex semence d'un polymère de méthacrylate de méthyle par polymérisation radicalaire en émulsion aqueuse du méthacrylate de méthyle et éventuellement d'au moins un comonomère, **caractérisé en ce qu'**on met en oeuvre :

   (A) du méthacrylate de méthyle et éventuellement au moins un comonomère,
   (B) au moins un agent générateur de radicaux ;
   (C) au moins un agent émulsionnant à raison d'une quantité totale d'au moins 4 % en poids par rapport au poids total de (A), et
   (D) de l'eau,

   qui comprend les étapes selon lesquelles

   (1) on introduit dans un réacteur au moins une fraction de (B), au moins 2.5 % en poids de (C) par rapport au poids total de (A), au moins une fraction de (D) et éventuellement au moins une fraction de (A), puis
   (2) on fait réagir le contenu du réacteur, tout en y introduisant de manière continue le solde de (A), (B), (C) et (D) ; et
   (3) on obtient et on isole un latex semence d'un polymère de méthacrylate de méthyle.

2. Procédé selon la revendication 1, **caractérisé en ce qu'**on met en oeuvre (A) du méthacrylate de méthyle.

3. Procédé selon la revendication 1, **caractérisé en ce qu'**on met en oeuvre un seul agent générateur de radicaux (B) et qu'il est choisi parmi les persulfates de métal alcalin et le persulfate d'ammonium.

4. Procédé selon la revendication 1, **caractérisé en ce qu'**on met en oeuvre (C) au moins un agent émulsionnant à raison d'une quantité totale d'au plus 20% en poids par rapport à (A).

5. Procédé selon la revendication 1, **caractérisé en que** les particules du latex semence du polymère de méthacrylate de méthyle ont un diamètre moyen, mesuré par fractionnement hydrodynamique, inférieur ou égal à 60 nm.

6. Procédé selon l'une quelconque des revendications 1 à 5, qui comprend les étapes selon lesquelles :

   (1) on introduit dans un réacteur au moins une fraction de (B), au moins 7 % en poids de (C) par rapport au poids total de (A), au moins 80 % de la totalité en poids de (D) et au plus 15 % de la totalité en poids de (A), puis
   (2) on fait réagir le contenu du réacteur, tout en y introduisant de manière continue le solde de (A), (B), (C) et (D) ; et
   (3) on obtient et on isole un latex semence d'un polymère de méthacrylate de méthyle.

7. Latex semence d'un polymère de méthacrylate de méthyle obtenu par le procédé selon la revendication 1, **caractérisé en ce que** les particules de celui-ci ont un diamètre moyen, mesuré par fractionnement hydrodynamique, inférieur ou égal à 60 nm et **en ce que** la distribution des diamètres des particules, déterminée par fractionnement hydrodynamique, est monomodale et se **caractérise par** un écart-type inférieur ou égal à 20 nm.

**8.** Procédé de préparation d'un latex d'un polymère vinylique chloré par polymérisation radicalaire en émulsion aqueuse d'au moins un monomère vinylique chloré, **caractérisé en ce que** la polymérisation a lieu en présence d'au plus 3 % en poids, exprimé par rapport au poids total des monomères, de matière sèche d'un latex semence d'un polymère de méthacrylate de méthyle obtenu par le procédé selon la revendication 1.

**9.** Procédé selon la revendication 8, **caractérisé en ce que** la polymérisation a lieu en présence d'au plus 1.5 % en poids, exprimé par rapport au poids total des monomères, de matière sèche du latex semence du polymère de méthacrylate de méthyle.

**10.** Procédé selon la revendication 8, **caractérisé en ce que** le polymère vinylique chloré est un polymère du chlorure de vinylidène.

**11.** Procédé selon la revendication 8, **caractérisé en ce** le polymère du chlorure de vinylidène est un copolymère du chlorure de vinylidène et d'au moins un monomère choisi parmi l'anhydride maléique, l'acide itaconique, les monomères (méth)acryliques que sont l'acrylate de méthyle, le méthacrylate de méthyle, l'acrylate d'éthyle, le méthacrylate d'éthyle, l'acrylate de n-butyle, le méthacrylate de n-butyle, l'acrylate de 2-éthylhexyle, le méthacrylate de 2-éthylhexyle, l'acrylate de 2-hydroxyéthyle, le méthacrylate de 2-hydroxyéthyle, le méthacrylate de glycidyle, l'acrylate de glycidyle, l'acrylonitrile, le méthacrylonitrile, l'acide acrylique, l'acide méthacrylique, l'acrylamide, la N-méthylolacrylamide, l'acide sulfonique de 2-acrylamido-2-méthylpropane (AMPS) ou l'un de ses sels, de sodium par exemple, l'acide 2-sulfoéthylméthacrylate (2-SEM) ou l'un de ses sels, de sodium par exemple et l'ester phosphate de polypropylèneglycol à terminaison méthacrylate ou l'un de ses sels, de sodium par exemple.

**12.** Latex d'un polymère vinylique chloré obtenu par le procédé selon la revendication 8, comprenant des particules dispersées dans l'eau d'un interpolymère de particules d'un latex semence d'un polymère de méthacrylate de méthyle dont le diamètre moyen mesuré par fractionnement hydrodynamique est inférieur ou égal à 60 nm, et d'un polymère vinylique chloré ; les particules du latex d'un polymère vinylique chloré **se caractérisant par** un diamètre moyen, mesuré par fractionnement hydrodynamique, supérieur ou égal à 120 nm.

**13.** Latex selon la revendication 12, **caractérisé en que** le polymère vinylique chloré est un polymère du chlorure de vinylidène.

**Claims**

**1.** Process for preparing a seed latex of a methyl methacrylate polymer by radical polymerization in aqueous emulsion of methyl methacrylate and optionally at least one comonomer, **characterized in that** the following are used:

(A) methyl methacrylate and optionally at least one comonomer;
(B) at least one radical generator;
(C) at least one emulsifier in a total amount of at least 4% by weight relative to the total weight of (A); and
(D) water,

which comprises the steps according to which:

(1) at least one fraction of (B), at least 2.5% by weight of (C) relative to the total weight of (A), at least one fraction of (D) and optionally at least one fraction of (A) are introduced into a reactor; then
(2) the contents of the reactor are reacted, while continuously introducing thereinto the balance of (A), (B), (C) and (D); and
(3) a methyl methacrylate polymer seed latex is obtained and isolated.

**2.** Process according to Claim 1, **characterized in that** (A) methyl methacrylate is used.

**3.** Process according to Claim 1, **characterized in that** a single radical generator (B) is used and that it is chosen from alkali metal persulphates and ammonium persulphate.

**4.** Process according to Claim 1, **characterized in that** (C) at least one emulsifier in a total amount of at most 20% by weight relative to (A) is used.

**5.** Process according to Claim 1, **characterized in that** the particles of the methyl methacrylate polymer seed latex have an average diameter, measured by hydrodynamic fractionation, less than or equal to 60 nm.

**6.** Process according to any one of Claims 1 to 5, which comprises the steps according to which:

(1) at least one fraction of (B), at least 7% by weight of (C) relative to the total weight of (A), at least 80% of all, by weight, of (D) and at most 15% of all, by weight, of (A) are introduced into a reactor; then
(2) the contents of the reactor are reacted, while continuously introducing thereinto the balance of (A), (B), (C) and (D); and
(3) a methyl methacrylate polymer seed latex is obtained and isolated.

**7.** Methyl methacrylate polymer seed latex obtained by the process according to Claim 1, **characterized in that** the particles of this latex have an average diameter, measured by hydrodynamic fractionation, less than or equal to 60 nm and **in that** the particle diameter distribution, determined by hydrodynamic fractionation, is monomodal and is **characterized by** a standard deviation less than or equal to 20 nm.

**8.** Process for preparing a chlorinated vinyl polymer latex by radical polymerization in aqueous emulsion of at least one chlorinated vinyl monomer, **characterized in that** the polymerization takes place in the presence of at most 3% by weight, expressed relative to the total weight of the monomers, of dry matter of a methyl methacrylate polymer seed latex obtained by the process according to Claim 1.

**9.** Process according to Claim 8, **characterized in that** the polymerization takes place in the presence of at most 1.5% by weight, expressed relative to the total weight of the monomers, of dry matter of the methyl methacrylate polymer seed latex.

**10.** Process according to Claim 8, **characterized in that** the chlorinated vinyl polymer is a vinylidene chloride polymer.

**11.** Process according to Claim 8, **characterized in that** the vinylidene chloride polymer is a copolymer of vinylidene chloride and at least one monomer chosen from maleic anhydride, itaconic acid, the (meth)acrylic monomers that are methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, 2-acrylamido-2-methylpropanesulphonic acid (AMPS) or one of its salts, for example the sodium salt, 2-sulphoethylmethacrylic acid (2-SEM) or one of its salts, for example the sodium salt, and the phosphate ester of methacrylate-terminated polypropylene glycol or one of its salts, for example the sodium salt.

**12.** Chlorinated vinyl polymer latex obtained by the process according to Claim 8, comprising particles dispersed in the water of an interpolymer of particles of a methyl methacrylate polymer seed latex, whose average diameter, measured by hydrodynamic fractionation, is less than or equal to 60 nm, and of a chlorinated vinyl polymer; the particles of the chlorinated vinyl polymer latex being **characterized by** an average diameter, measured by hydrodynamic fractionation, greater than or equal to 120 nm.

**13.** Latex according to Claim 12, **characterized in that** the chlorinated vinyl polymer is a vinylidene chloride polymer.

**Patentansprüche**

**1.** Verfahren zur Herstellung eines Saatlatex eines Methylmethacrylatpolymers durch radikalische wäßrige Emulsionspolymerisation von Methylmeth-acrylat und gegebenenfalls mindestens einem Comonomer, **dadurch gekennzeichnet, daß** man :

(A) Methylmethacrylat und gegebenenfalls mindestens ein Comonomer,
(B) mindestens einen Radikalbildner ;
(C) mindestens einen Emulgator in einer Gesamtmenge von mindestens 4 Gew.- %, bezogen auf das Gesamtgewicht von (A), und
(D) Wasser

verwendet, bei dem man

(1) mindestens einen Teil von (B), mindestens 2,5 Gew.- % (C), bezogen auf das Gesamtgewicht von (A), mindestens einen Teil von (D) und gegebenenfalls mindestens einen Teil von (A) in einen Reaktor einträgt, dann
(2) den Inhalt des Reaktors zur Reaktion bringt, wobei man den Rest von (A), (B), (C) und (D) kontinuierlich in den Reaktor einträgt; und
(3) einen Saatlatex eines Methylmethacrylatpolymers erhält und isoliert.

2. Verfahren nach Anspruch 1, **dadurch gekennzeichnet, daß** man (A) Methylmethacrylat verwendet.

3. Verfahren nach Anspruch 1, **dadurch gekennzeichnet, daß** man einen einzigen Radikalbildner (B) verwendet und diesen unter Alkalimetallpersulfaten und Ammoniumpersulfat auswählt.

4. Verfahren nach Anspruch 1, **dadurch gekennzeichnet, daß** man (C) mindestens einen Emulgator in einer Gesamtmenge von mehr als 20 Gew.- %, bezogen auf (A), verwendet.

5. Verfahren nach Anspruch 1, **dadurch gekennzeichnet, daß** die Teilchen des Saatlatex des Methylmethacrylatpolymers einen durch hydrodynamische Fraktionierung gemessenen mittleren Durchmesser kleiner gleich 60 nm aufweisen.

6. Verfahren nach einem der Ansprüche 1 bis 5, **dadurch gekennzeichnet, daß** man :

(1) mindestens einen Teil von (B), mindestens 7 Gew.- % (C), bezogen auf das Gesamtgewicht von (A), mindestens 80 Gew.- % der Gesamtheit von (D) und höchstens 15 Gew.- % der Gesamtheit von (A) in einen Reaktor einträgt, dann
(2) den Inhalt des Reaktors zur Reaktion bringt, wobei man den Rest von (A), (B), (C) und (D) kontinuierlich in den Reaktor einträgt; und
(3) einen Saatlatex eines Methylmethacrylatpolymers erhält und isoliert.

7. Nach dem Verfahren nach Anspruch 1 erhaltener Saatlatex eines Methylmethacrylatpolymers, **dadurch gekennzeichnet, daß** Teilchen davon einen durch hydrodynamische Fraktionierung gemessenen mittleren Durchmesser kleiner gleich 60 nm aufweisen und die durch hydrodynamische Fraktionierung bestimmte Teilchendurchmesserverteilung monomodal ist und durch eine Standardabweichung kleiner gleich 20 nm **gekennzeichnet** ist.

8. Verfahren zur Herstellung eines Latex eines chlorierten Vinylpolymers durch radikalische wäßrige Emulsionspolymerisation mindestens eines chlorierten Vinylmonomers, **dadurch gekennzeichnet, daß** die Polymerisation in Gegenwart von höchstens 3 Gew.- %, ausgedrückt im Verhältnis zum Gesamtgewicht der Monomere, Trockensubstanz eines Saatlatex eines nach dem Verfahren nach Anspruch 1 erhaltenen Methylmethacrylatpolymers erfolgt.

9. Verfahren nach Anspruch 8, **dadurch gekennzeichnet, daß** die Polymerisation in Gegenwart von höchstens 1,5 Gew.- %, ausgedrückt im Verhältnis zum Gesamtgewicht der Monomere, Trockensubstanz eines Saatlatex eines Methylmethacrylatpolymers erfolgt.

10. Verfahren nach Anspruch 8, **dadurch gekennzeichnet, daß** es sich bei dem chlorierten Vinylpolymer um ein Vinylidenchloridpolymer handelt.

11. Verfahren nach Anspruch 8, **dadurch gekennzeichnet, daß** es sich bei dem Vinylidenchloridpolymer um ein Copolymer von Vinylidenchlorid und mindestens einem unter Maleinsäureanhydrid, Itaconsäure, den (Meth)acrylmonomeren, bei denen es sich um Methylacrylat, Methylmethacrylat, Ethylacrylat, Ethylmethacrylat, n-Butylacrylat, n-Butylmethacrylat, 2-Ethylhexylacrylat, 2-Ethylhexylmethacrylat, 2-Hydroxyethylacrylat, 2-Hydroxyethylmethacrylat, Glycidylmethacrylat, Glycidylacrylat, Acrylnitril, Methacrylnitril, Acrylsäure, Methacrylsäure, Acrylamid, N-Methylolacrylamid, 2-Acrylamido-2-methylpropansulfonsäure (AMPS) oder eines ihrer Salze, beispielsweise das Natriumsalz, 2-Sulfoethylmethacrylsäure (2-SEM) oder eines ihrer Salze, beispielsweise das Natriumsalz, und den Phosphatester von methacrylatterminiertem Polypropylenglykol eines ihrer Salze, beispielsweise das Natriumsalz, handelt, ausgewählten Monomer handelt.

12. Nach dem Verfahren nach Anspruch 8 erhaltener Latex eines chlorierten Vinylpolymers, umfassend in Wasser dispergierte Teilchen eines Mischpolymers von Teilchen eines Saatlatex eines Methylmethacrylatpolymers mit einem durch hydrodynamische Fraktionierung gemessenen mittleren Durchmesser kleiner gleich 60 nm und eines chlorierten Vinylpolymers ; wobei die Teilchen des Latex eines chlorierten Vinylpolymers durch einen durch hydrodynamische Fraktionierung gemessenen mittleren Durchmesser größer gleich 120 nm **gekennzeichnet** sind.

13. Latex nach Anspruch 12, **dadurch gekennzeichnet, daß** es sich bei dem chlorierten Vinylpolymer um ein Vinylidenchloridpolymer handelt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   FR 1466220
*   JP 54103498 A
*   JP 54103497 A

**Littérature non-brevet citée dans la description**

*   **R.F.G. Brown ; C. Carr.** Préparation of concentrated monodisperse latex dispersions of predetermined particle size. *Surface Coatings International, Part B : Coatings Transactions,* 2001, vol. 84 (B4), 293-300